# EUROPÄISCHE PATENTSCHRIFT

(11) **EP 1 400 425 B1**
(45) Veröffentlichungstag und Bekanntmachung des Hinweises auf die Patenterteilung: **12.04.2006**
(21) Anmeldenummer: 03020738.5
(22) Anmeldetag: 12.09.2003
(51) Int. Cl.: B60T 13/575

(54) **Unterdruck-Bremskraftverstärker für eine Hilfskraft-Bremsanlage für Kraftfahrzeuge**
Vacuum brake booster for an energy-assisted braking system for motor vehicles
Servofrein à dépression pour un système de freinage auxiliaire pour véhicules automobiles

(30) Priorität: 21.09.2002 DE 10244002
(43) Veröffentlichungstag der Anmeldung: 24.03.2004
(73) Patentinhaber: FTE automotive GmbH, 96106 Ebern (DE)
(72) Erfinder: Schramm, Horst, 96169 Lauter (DE); Seidl, Rolf, 97461 Rügheim (DE); Hoch, Joachim, 96151 Breitbrunn (DE)
(74) Vertreter: Oppermann, Mark

(56) Entgegenhaltungen:
- EP-A- 1 090 822
- EP-A- 1 123 849
- DE-A- 3 930 240
- DE-A- 3 939 499
- US-A- 4 892 027
- US-A- 5 873 296

## Beschreibung

Die vorliegende Erfindung bezieht sich auf einen Unterdruck-Bremskraftverstärker für eine Hilfskraft-Bremsanlage für Kraftfahrzeuge nach dem Oberbegriff des Patentanspruchs 1, wie sie massenweise in der Automobilindustrie zum Einsatz kommen.

Bei einer Hilfskraft-Bremsanlage in einem Kraftfahrzeug geht die zur Erzeugung der Bremskraft benötigte Energie von mindestens einer Energieversorgungseinrichtung und - im Gegensatz zu einer Fremdkraft-Bremsanlage - der physischen Kraft des Fahrers des Kraftfahrzeugs aus. Zur Umsetzung dieser Energie bedient man sich in der Regel eines Unterdruck-Bremskraftverstärkers, der zwischen Bremspedal und Hauptzylinder in einfacher oder Tandem-Bauweise geschaltet ist. Der Unterdruck-Bremskraftverstärker weist einen mit dem Hauptzylinder über ein Ausgangsglied wirkverbundenen Arbeitskolben auf, welcher eine Unterdruckkammer von einer Arbeitskammer trennt. Der Unterdruck-Bremskraftverstärker hat des weiteren ein mit dem Bremspedal über ein Eingangsglied wirkverbundenes Steuerventil, das wahlweise die Unterdruckkammer und die Arbeitskammer untereinander oder letztere mit der Umgebung verbindet. Die Unterdruckkammer ist bei Kraftfahrzeugen mit Ottomotor an das Saugrohr des Motors angeschlossen. Bei Kraftfahrzeugen mit Dieselmotor wird der Unterdruck durch eine Vakuumpumpe erzeugt, die vom Motor direkt angetrieben ist.

Beim Betätigen der Bremsanlage im normalen Betrieb wird die Arbeitskammer über das Steuerventil mit der Umgebung verbunden, so daß Luft von atmosphärischem Druck in die Arbeitskammer einströmt und sich dort ein Mischdruck einstellt. Die über das Bremspedal auf den Hauptzylinder aufgebrachte Kraft verstärkt sich dabei um die durch den Druckunterschied in den Kammern entstehende Kraft, wobei der sich im Hauptzylinder infolge dieser Kraft aufgebaute Bremsdruck über ein elastomeres Reaktionsglied, welches im Unterdruck-Bremskraftverstärker zwischen dem Eingangsglied und dem Ausgangsglied angeordnet ist, als Reaktionskraft an das Bremspedal zurückgemeldet wird. Wird nun die auf das Bremspedal aufgebrachte Kraft kontinuierlich gesteigert, so erhöht sich der Mischdruck in der Arbeitskammer bis auf atmosphärischen Druck, bei dem die maximale Druckdifferenz zwischen den Kammern herrscht. Eine Erhöhung der Hilfskraft ist nicht mehr möglich, die Arbeitskraft des Unterdruck-Bremskraftverstärkers ist in diesem auch als Aussteuerpunkt des Unterdruck-Bremskraftverstärkers bezeichneten Zustand ausgeschöpft. Eine weitere Erhöhung des Bremsdrucks ist nur noch über eine Steigerung der auf das Bremspedal aufgebrachten Kraft möglich. Beim Zurücknehmen des Bremspedals wird die Luft atmosphärischen Drucks aus der Arbeitskammer über das Steuerventil und die Unterdruckkammer abgesaugt und der Arbeitskolben läuft unter Abbau des Bremsdrucks im Hauptzylinder in seine Ausgangsstellung zurück. Bei Ausfall des Unterdrucks wirkt die über das Bremspedal aufgebrachte Kraft alleine auf den Hauptzylinder.

Derartige Unterdruck-Bremskraftverstärker haben in der Regel ein im wesentlichen konstantes Übersetzungsverhältnis, so daß sich im Betriebsbereich des Unterdruck-Bremskraftverstärkers, d.h. zwischen dem auch als Drucksprung bezeichneten Zustand, in dem das mit dem Bremspedal verbundene Eingangsglied vollflächig mit dem elastomeren Reaktionsglied zur Anlage gelangt und die Servounterstützung des Unterdruck-Bremskraftverstärkers einsetzt, und dem oben erwähnten Aussteuerpunkt des Unterdruck-Bremskraftverstärkers ein im wesentlichen linearer Verlauf der mittels des Ausgangsglieds abgegebenen Ausgangskraft des Unterdruck-Bremskraftverstärkers bzw. des sich im Hauptzylinder einstellenden Bremsdrucks über der am Bremspedal aufgebrachten Eingangskraft ergibt. Dieser im Betriebsbereich des Unterdruck-Bremskraftverstärkers stetige, im wesentlichen lineare Verlauf der Ausgangskraft über der Eingangskraft wird auch als "single rate"-Kennung bezeichnet.

Beim Einsatz derartiger Unterdruck-Bremskraftverstärker ist festgestellt worden, daß ein Großteil aller Fahrer selbst bei vermeintlichen Vollbremsungen nicht die volle Hilfskraftunterstützung des Unterdruck-Bremskraftverstärkers erzielen kann. Tests haben ergeben, daß die durch den Fahrer auf das Bremspedal aufgebrachte Eingangskraft oftmals nicht ausreicht, den Unterdruck-Bremskraftverstärker bis zum Aussteuerpunkt anzusprechen, oder zu frühzeitig verringert wird, so daß der maximal verfügbare Hilfskraftanteil nicht ausgeschöpft wird. Selbst ein erneutes Nachsetzen auf das teilweise niedergetretene Bremspedal verbessert dann den Bremsvorgang nicht mehr. Im Ergebnis wird ein Teil des maximal möglichen Bremsdrucks nicht aufgebracht, so daß der bestmögliche Bremsweg nicht erzielt werden kann. Selbst ein Kraftfahrzeug mit einer Antiblockierregelung kann nicht optimal verzögert werden, wenn der Fahrer nicht entschlossen genug auf das Bremspedal tritt, wodurch sich der Bremsweg um etliche, oft entscheidende Meter verlängert.

Im Stand der Technik (z.B. EP 0 705 190 B1, EP 1 123 849 A2) sind deshalb bereits Bremskraftverstärker vorgeschlagen worden, bei denen sich das Übersetzungsverhältnis im Betriebsbereich des Bremskraftverstärkers ab einer bestimmten aufgebrachten Eingangskraft derart ändert, daß für eine weitere Erhöhung der Ausgangskraft eine im Verhältnis nur geringere Erhöhung der Eingangskraft notwendig ist. Trägt man bei diesen Bremskraftverstärkern die Ausgangskraft über der Eingangskraft auf, so "knickt" der Verlauf der Ausgangskraft zwischen dem Drucksprung und dem Aussteuerpunkt bei der bestimmten aufgebrachten Eingangskraft nach oben ab, so daß der Verlauf der Ausgangskraft hier zwei im wesentlichen lineare Abschnitte von unterschiedlicher Steigung aufweist, was auch als "dual rate"-Kennung bezeichnet wird. Diese Kennung hat den Vorteil, daß die Bremskraft im unteren, flacheren Bereich der Kennung bei moderaten Eingangskräften mit einem guten Pedalgefühl wohldosiert aufgebracht werden kann, während bei etwa einer Panikbremsung mit erhöhten Eingangskräften der obere, steilere Bereich der Kennung erreicht wird, in dem eine weitere Zunahme der Eingangskraft eine im Verhältnis zum unteren Bereich der Kennung größere Zunahme der Ausgangskraft zur Folge hat, so daß der maximal verfügbare Hilfskraftanteil auch ausgeschöpft werden kann.

Genauer gesagt offenbart die gattungsbildende EP 0 705 190 B1 einen Bremskraftverstärker mit einem fluidbetätigten Servokolben, dessen Arbeitsfluidzufuhr durch einen Ventilmechanismus gesteuert wird, der unter dem Einfluß eines vom Fahrer betätigten Krafteingangselements betätigbar ist. Hierbei wirkt das Eingangselement über eine Kraftübertragungsanordnung auf ein Ausgangselement, das derart angeordnet ist, daß es im Betrieb eine servounterstützte Eingangsgröße an einen Hauptbremszylinder liefert. Diese Kraftübertragungsanordnung enthält ein Reaktionselement in Form einer vollzylindrischen Elastomerscheibe mit quasi-hydraulischen Eigenschaften, die in einer Aussparung des Servokolbens aufgenommen ist, und weist Flächen auf, über welche die Kraft zwischen dem Eingangselement und dem Ausgangselement über das Reaktionselement übertragen wird.

Gemäß einem wesentlichen Aspekt dieses Stands der Technik hat die Kraftübertragungsanordnung zusätzlich ein eingangs- oder ausgangsseitig angeordnetes, nachgiebiges Mittel in Form einer Feder, die unter einer vorbestimmten übertragenen Kraft nachgibt, um die Bewegung von mindestens einem Teil der Kraftübertragungsanordnung zu ermöglichen, wodurch eine Veränderung in dem Verhältnis der Wirkflächen an dem Reaktionselement in einer Weise bewirkt wird, daß das Verstärkungsverhältnis gesteigert wird.

Bei einem Ausführungsbeispiel (Fig. 5 und 6) der EP 0 705 190 B1 ist das Ausgangselement zweiteilig ausgebildet, mit einem ersten Teil, das mit dem Hauptbremszylinder verbunden werden kann, und einem zweiten Teil, welches mit einer Fläche A₂ an dem im Servokolben aufgenommenen Reaktionselement anliegt. Auf der anderen Seite des Reaktionselements liegt das Eingangselement mit einer Fläche A₁ am Reaktionselement an, die kleiner ist als die Fläche A₂. Zwischen dem ersten Teil und dem zweiten Teil des Ausgangselements ist eine Druckfeder als das nachgiebige Mittel angeordnet. Bei der vorbestimmten übertragenen Kraft gibt die Druckfeder nach, so daß sich die zwei Teile des Ausgangselements aufeinander zu bewegen können. Dabei kann das erste Teil des Ausgangselements an dem Servokolben zur Anlage gelangen, so daß sich das Verstärkungsverhältnis von zunächst A₂:A₁ auf unendlich erhöht, d.h. die "dual rate"-Kennung zwischen dem Drucksprung und dem Aussteuerpunkt aus dem unteren Bereich der Kennung derart nach oben "abknickt", daß der obere Bereich der Kennung parallel zur Ordinate verläuft. Dies vermittelt dem Fahrer beim Bremsen zwar noch den Umschaltpunkt zwischen den beiden Kennungsbereichen, worauf aber in unerwünschter Weise, weil unvermittelt und ohne Pedalgefühl, der Aussteuerpunkt des Bremskraftverstärkers mit einem Sprung erreicht wird. Ein weiterer Nachteil dieses Stands der Technik wird darin gesehen, daß die zusätzliche Feder einen in der Massenfertigung von Bremskraftverstärkern unerwünschten Mehraufwand bedingt und auch die Störanfälligkeit des Bremskraftverstärkers erhöht.

Entsprechendes gilt für den aus der JP 10-016757 A bekannten Unterdruck-Bremskraftverstärker, bei dem ebenfalls in Notbremssituationen ab einer vorbestimmten Eingangskraft infolge einer Überbrückung des elastomeren Reaktionselements eine unendliche Verstärkung einsetzt.

Des weiteren wird in der EP 1 123 849 A2 eine Bremskraftübersetzungsvorrichtung mit "dual rate"-Kennung vorgeschlagen, die ein betätigbares Eingangsglied, ein Ausgangsglied zur Beaufschlagung eines Hauptbremszylinders mit einer Verstärkungskraft und ein in einem Steuergehäuse angeordnetes Steuerventil zur Regelung der Verstärkungskraft aufweist. Hierbei ist im Bereich eines elastomeren Reaktionsglieds, welches in einem in das Steuergehäuse integrierten, napfförmigen Aufnahmekörper aufgenommen ist, ein axial bewegbares, mittels einer Feder in Richtung des Reaktionsglieds vorgespanntes Druckstück vorgesehen, welches sich an dem Eingangsglied oder vermittels einer Kupplungsvorrichtung an dem Steuergehäuse abstützt und dadurch eine Änderung des Kraftübersetzungsverhältnisses ermöglicht.

Gemäß einem wesentlichen Aspekt dieses Stands der Technik ist eine Anlagefläche für das Reaktionsglied im Bereich des Eingangsglieds mit wenigstens einer Ausnehmung versehen, in die ein Teil des Reaktionsglieds nur bei erhöhten Reaktionskräften drängbar ist, wodurch sich infolge einer Veränderung des Wirkflächenverhältnisses an dem Reaktionsglied eine dem Eingangsglied mitgeteilte Bremsreaktionskraft reduziert, oder sich eine dem Ausgangsglied mitgeteilte Bremskraft erhöht. Eine ähnliche Konstruktion mit einer ringförmigen, das Druckstück umgebenden Ausnehmung ist aus der US 5 873 296 A bekannt. In einer alternativen Ausgestaltung gemäß der EP 1 123 849 A2 weist das Reaktionsglied im Bereich wenigstens einer vorzugsweise glatten Anlagefläche eine Stufenform auf, so daß bei geringen Bremsreaktionskräften ein geringerer Flächenteil zur Anlage an einer eingangsgliedseitigen Anlagefläche kommt, als bei hohen Bremsreaktionskräften, unter denen sich das Reaktionsglied stärker verformt.

Zwar hat die Bremskraftübersetzungsvorrichtung gemäß der EP 1 123 849 A2 gegenüber dem Stand der Technik nach der EP 0 705 190 B1 den Vorteil, daß die verhältnismäßig stark zu dimensionierende zusätzliche Feder des letztgenannten Stands der Technik vermieden wird. Ein Nachteil der in der EP 1 123 849 A2 vorgeschlagenen Lehre ist aber darin zu sehen, daß das Reaktionsglied bei einer Bremsbetätigung im gesamten Betriebsbereich der Bremskraftübersetzungsvorrichtung zwischen dem Drucksprung und dem Aussteuerpunkt stets im vollen Kraftfluß zwischen dem Steuergehäuse und dem Ausgangsglied liegt, was insbesondere bei den Verformungen des Reaktionsglieds im Bereich der Anlageflächenausnehmung am Eingangsglied bzw. der eingangsgliedseitigen Stufenform am Reaktionsglied zu einer vorzeitigen Zerstörung des Reaktionsglieds und damit verbundenen Funktionsstörungen bzw. einem Ausfall der Bremskraftübersetzungsvorrichtung führen kann.

Ausgehend vom Stand der Technik gemäß der EP 0 705 190 B1 liegt der Erfindung die Aufgabe zugrunde, einen möglichst einfach ausgebildeten Unterdruck-Bremskraftverstärker mit "dual rate"-Kennung zu schaffen, der auch die funktionalen Nachteile des oben geschilderten Stands der Technik vermeidet.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 16.

Erfindungsgemäß ist bei einem Unterdruck-Bremskraftverstärker für eine Hilfskraft-Bremsanlage für Kraftfahrzeuge, der ein Eingangsglied hat, mittels dessen eine Ventilanordnung mit einer Eingangskraft ansteuerbar ist, um eine Arbeitskammer wahlweise mit der Umgebung oder mit einer Unterdruckkammer zu verbinden, die von der Arbeitskammer durch einen Arbeitskolben getrennt ist, der zur Erzeugung eines Bremsdrucks über ein Ausgangsglied mit einem Hauptzylinder wirkverbindbar ist und an dem ein elastomeres Reaktionsglied vorgesehen ist, über das eine bremsdruckabhängige Reaktionskraft in das Eingangsglied einkoppelbar ist, wobei das Ausgangsglied einen Anschlag aufweist, der bei einer vorbestimmten Eingangskraft an dem Arbeitskolben zur Anlage gelangt, um ein Übersetzungsverhältnis des Unterdruck-Bremskraftverstärkers zu ändern, angrenzend an das Reaktionsglied wenigstens ein Volumenaufnehmer angeordnet, in den bei einer Betätigung des Unterdruck-Bremskraftverstärkers ein Teil des Reaktionsglieds drängbar ist, während der Anschlag und/oder der Arbeitskolben im Anlagebereich für den Anschlag federnd ausgebildet ist, so daß bei Anlage des Anschlags am Arbeitskolben noch eine Relativbewegung zwischen dem Ausgangsglied und dem Arbeitskolben möglich ist.

Dadurch, daß angrenzend an das Reaktionsglied wenigstens ein Volumenaufnehmer angeordnet ist, in den bei einer Betätigung des Unterdruck-Bremskraftverstärkers ein Teil des Reaktionsglieds drängbar ist, ist eine Relativbewegung zwischen dem Anschlag und dem Arbeitskolben möglich, so daß der Anschlag an dem Arbeitskolben zur Anlage gelangen kann, um das Übersetzungsverhältnis des Unterdruck-Bremskraftverstärkers zu ändern. Im Gegensatz zur Lehre der EP 1 123 849 A2 dient der wenigstens eine Volumenaufnehmer also nicht dazu, entsprechend diesem Stand der Technik die eingangsgliedseitige Wirkfläche wesentlich zu ändern, sondern dazu, durch Aufnahme eines bei der Betätigung des Unterdruck-Bremskraftverstärkers verdrängten bzw. wegfließenden Teils des elastomeren Reaktionsglieds zunächst eine Annäherung des Anschlags des Ausgangsglieds an den Arbeitskolben zu gestatten bis der Anschlag des Ausgangsglieds bei der über das Eingangsglied aufgebrachten vorbestimmten Eingangskraft an dem Arbeitskolben zur Anlage gelangt. Mit der Anlage des Anschlags des Ausgangsglieds an dem Arbeitskolben verändert sich sodann das innere Übersetzungsverhältnis des Unterdruck-Bremskraftverstärkers, d.h. dessen Kennung "knickt" wie oben beschrieben nach oben ab. Ab diesem Zeitpunkt liegt das Reaktionsglied zudem in vorteilhafter Weise nicht mehr im vollen Kraftfluß, so daß eine gegenüber dem Stand der Technik nach der EP 1 123 849 A2 geringere Gefahr einer Beschädigung des Reaktionsglieds besteht.

Weil des weiteren der Anschlag und/oder der Arbeitskolben im Anlagebereich für den Anschlag federnd ausgebildet ist, ist bei Anlage des Anschlags am Arbeitskolben noch eine Relativbewegung zwischen dem Ausgangsglied und dem Arbeitskolben möglich. Infolge dieser Ausbildung des Unterdruck-Bremskraftverstärkers stellt sich mit Anlage des Anschlags des Ausgangsglieds an dem Arbeitskolben bei weiterer Erhöhung der Eingangskraft im Gegensatz zur Offenbarung der EP 0 705 190 B1 kein unendliches Übersetzungsverhältnis ein, d.h. der obere Bereich der erzielten "dual rate"-Kennung verläuft nicht parallel zur Ordinate, sondern lediglich mit gegenüber dem unteren Bereich der Kennung größerer Steigung, so daß für den Fahrer im oberen Bereich der Kennung noch ein hinreichend gutes Pedalgefühl vorhanden ist. Auch im oberen Bereich der erzielten "dual rate"-Kennung kann hierbei noch ein Teil des Reaktionsglieds in den wenigstens einen Volumenaufnehmer verdrängt werden, d.h. das Reaktionsglied kann sich unter weiterer Dickenabnahme weiter setzen, wobei ein Teil davon in den wenigstens einen Volumenaufnehmer fließt.

Ein weiterer Vorteil der erfindungsgemäßen Ausbildung des Unterdruck-Bremskraftverstärkers gegenüber dem eingangs geschilderten Stand der Technik ist schließlich darin zu sehen, daß in der Reihenschaltung von Eingangsglied, Reaktionsglied/ Arbeitskolben und Ausgangsglied bzw. Anschlag keine aufwendigen zusätzlichen Federelemente vorgesehen sind, was den Aufbau und die Herstellung des Unterdruck-Bremskraftverstärkers insgesamt vereinfacht sowie dessen Störanfälligkeit und Gestehungskosten reduziert.

Durch die Lage, die Anzahl, die Größe und/oder die Geometrie des/der Volumenaufnehmer(s) kann im Zusammenspiel mit den Werkstoffeigenschaften des elastomeren, gummielastischen Reaktionsglieds den jeweiligen Erfordernissen entsprechend auf einfache Weise Einfluß genommen werden auf das Fließ- bzw. Setzverhalten des Reaktionsglieds und somit auf sowohl die Steigung der "dual rate"-Kennung als auch die Lage des Umschaltpunkts, an dem die "dual rate"-Kennung nach oben "abknickt". So kann gemäß dem Patentanspruch 2 wenigstens ein Volumenaufnehmer am Ausgangsglied vorgesehen sein. Weist hierbei entsprechend dem Patentanspruch 3 das Ausgangsglied in einer fertigungstechnisch einfachen Ausgestaltung einen am Reaktionsglied mit einer Stirnfläche anliegenden Absatz auf, dessen Außenumfangsfläche einen ringförmigen Freiraum als Volumenaufnehmer begrenzt, kann mit der Ausbildung des Freiraums durch z.B. Abdrehen des Ausgangsglieds zugleich gezielt Einfluß genommen werden auf die Größe der am Reaktionsglied anliegenden Stirnfläche des Absatzes als weitere Einflußgröße auf das Übersetzungsverhältnis des Unterdruck-Bremskraftverstärkers.

Bei dieser Ausgestaltung des Ausgangsglieds ist es von Vorteil, wenn, wie im Patentanspruch 4 angegeben, das Ausgangsglied zwischen der Stirnfläche und der Außenumfangsfläche des Absatzes mit einer Schräge versehen ist, die zum einen bei einer Betätigung des Unterdruck-Bremskraftverstärkers das Fließen bzw. Setzen des Reaktionsglieds begünstigt und zum anderen im Vergleich zu einer scharfen Kante zwischen der Stirnfläche und der Außenumfangsfläche des Absatzes die Gefahr einer Beschädigung des Reaktionsglieds weiter reduziert.

In Ergänzung oder als Alternative zu der ausgangsgliedseitigen Anordnung mindestens eines Volumenaufnehmers kann entsprechend dem Patentanspruch 5 wenigstens ein Volumenaufnehmer am Reaktionsglied vorgesehen sein, was besonders leicht zu realisieren ist. So kann es sich nach der Lehre des Patentanspruchs 6 bei dem Reaktionsglied um eine - im unverformten Zustand - im wesentlichen zylindrische Scheibe handeln, an deren Außenumfang eine umlaufende Ausnehmung als Volumenaufnehmer ausgebildet ist. Weist hierbei gemäß dem Patentanspruch 7 die umlaufende Ausnehmung einen - im unverformten Zustand - halbkreisförmigen Querschnitt auf, so begünstigt dies wiederum das Fließen bzw. Setzen des Reaktionsglieds unter Last.

Eine weitere, vorteilhaft einfache Ausgestaltung eines reaktionsgliedsseitigen Volumenaufnehmers gibt der Patentanspruch 8 an, gemäß dem es sich bei dem Reaktionsglied - im unverformten Zustand - um eine Scheibe handelt, die nach wenigstens einer ihrer Stirnseiten hin kegelstumpfförmig abgeschrägt ist, um einen ringförmigen Freiraum als Volumenaufnehmer auszubilden.

Grundsätzlich ist es möglich, einen Volumenaufnehmer bzw. Freiraum am Reaktionsglied einseitig, d.h. eingangs- oder ausgangsseitig vorzusehen. In diesem Zusammenhang haben Versuche der Anmelderin gezeigt, daß bei ansonsten gleichen Einbaubedingungen eine ausgangsseitige Anordnung des Freiraums am Reaktionsglied zu einem Umschaltpunkt der "dual rate"-Kennung führt, der im Vergleich zu einer eingangsseitigen Anordnung des Freiraums am Reaktionsglied bei einer niedrigeren Eingangskraft liegt. Ist eine Einflußnahme auf die Kennung durch die Ausrichtung des Reaktionsglieds nicht erwünscht bzw. soll hier eine unerwünschte Einflußnahme ausgeschlossen werden, bietet sich die Ausgestaltung nach dem Patentanspruch 9 an, gemäß dem es sich bei dem Reaktionsglied - im unverformten Zustand - um eine Scheibe handelt, die bezüglich einer gedachten, zu ihren Stirnseiten parallelen Ebene symmetrisch ausgebildet ist, was eine ungerichtete Montage des Reaktionsglieds ermöglicht.

Besonders vorteilhaft ist es, wenn entsprechend dem Patentanspruch 10 der Anschlag beim Zusammenbau des Unterdruck-Bremskraftverstärkers hinsichtlich seiner axialen Lage einstellbar ist. So ist es nämlich möglich, den bis auf den Anschlag bzw. das Ausgangsglied funktionstüchtig montierten Unterdruck-Bremskraftverstärker unter Einbaubedingungen, d.h. angelegtem Unterdruck über das Eingangsglied mit einer vorbestimmten Eingangskraft zu beaufschlagen, bei der die "dual rate"-Kennung nach oben "abknicken" soll, und sodann den Anschlag derart einzustellen, daß er bei dieser Eingangskraft an dem Arbeitskolben zur Anlage gelangt. Diese Vorgehensweise hat den wesentlichen Vorteil, daß etwaige Toleranzen der beteiligten Bauelemente hinsichtlich Form, Lage und Werkstoff automatisch ausgeglichen werden und somit keinen Einfluß auf die Lage des Umschaltpunkts der "dual rate"-Kennung haben.

Der Patentanspruch 11 sieht vor, daß es sich bei dem Ausgangsglied um einen Druckstößel handelt, der einen mit dem Hauptzylinder wirkverbindbaren Druckstößelschaft und einen am Reaktionsglied anliegenden, federnd biegbaren Druckstößelteller aufweist, wobei der Anschlag durch einen am Druckstößelteller angebrachten Ringbund ausgebildet ist. Diese Ausgestaltung ist u.a. insofern vorteilhaft, als für den Anschlag kein zusätzliches Bauteil benötigt wird, der Anschlag vielmehr einstückig mit dem Ausgangsglied ausgebildet ist. Die gewünschte Federwirkung des Druckstößeltellers kann hier durch geeignete Wahl der Dicke des Druckstößeltellers eingestellt bzw. beeinflußt werden.

Eine hierzu alternative Ausgestaltung des Anschlags gibt der Patentanspruch 12 an. Demgemäß handelt es sich bei dem Ausgangsglied um einen Druckstößel, der einen mit dem Hauptzylinder wirkverbindbaren Druckstößelschaft und einen am Reaktionsglied anliegenden Druckstößelteller aufweist, wobei der Anschlag durch ein am Druckstößelschaft befestigtes, federnd biegbares Bundteil ausgebildet ist. Insbesondere wenn hier das Bundteil entsprechend dem Patentanspruch 13 einen mit einem Innengewinde versehenen Hülsenabschnitt aufweist, der auf ein am Druckstößelschaft ausgebildetes Außengewinde aufgeschraubt ist und von dem sich ein ringförmiger, federnd biegbarer Bundabschnitt weg erstreckt, gestaltet sich eine Einstellung des Anschlags hinsichtlich seiner axialen Lage beim Zusammenbau des Unterdruck-Bremskraftverstärkers besonders einfach.

Durch die angesprochene zweiteilige Ausbildung von Anschlag und Ausgangsglied ist es weiterhin möglich, für diese Bauelemente den jeweiligen Erfordernissen entsprechend jeweils andere Werkstoffe zu verwenden, wobei das Bundteil vorteilhaft aus Federstahl ausgebildet werden kann, wie im Patentanspruch 14 angegeben.

Nach der Lehre des Patentanspruchs 15 weist der Arbeitskolben ein Einsatzteil zur Aufnahme des Reaktionsglieds auf, wobei das Einsatzteil auch zur Führung des Eingangsglieds und des Ausgangsglieds ausgebildet ist und eine Anlagefläche für den Anschlag hat. Ein solches Einsatzteil, welches in vorteilhafter Weise mehrere Funktionen erfüllt, kann unverändert für verschiedene Unterdruck-Bremskraftverstärker mit u.a. unterschiedlich großen Arbeitskolben verwendet werden und gestattet somit wirtschaftliche Baukastenlösungen.

Der Patentanspruch 16 sieht schließlich vor, daß das Reaktionsglied mit einer Schmierpaste geschmiert ist und/oder mit einer Gleitbeschichtung versehen ist und/oder dem Elastomer des Reaktionsglieds beigemengte Gleitverbesserer aufweist. Durch diese Maßnahmen wird das Fließ- bzw. Setzverhalten des Reaktionsglieds verbessert, weil an den Flächen, gegen die das Reaktionsglied unter Last gepreßt wird, infolge des durch die obigen Maßnahmen verminderten Reibungskoeffizienten nur geringere, das Fließen bzw. Setzen des Reaktionsglieds behindernde Reibkräfte auftreten. Zudem wird durch diese Maßnahmen die Hysterese der "dual rate"-Kennung schmaler, d.h. der Verlauf der Kennung bei Entlastung des Unterdruck-Bremskraftverstärkers folgt besser dem Verlauf der Kennung bei Belastung des Unterdruck-Bremskraftverstärkers, weil sich das Reaktionsglied, das ein elastomer-eigenes Rückstellvermögen besitzt, infolge der geringeren Reibkräfte besser bzw. schneller zurückverformen kann. Es ergibt sich somit ein verbessertes Pedalgefühl mit einer feinfühligeren Modulierfähigkeit des Bremsdrucks, insbesondere wenn das auf das Eingangsglied wirkende Bremspedal beim Bremsvorgang nur vorübergehend entlastet und sodann relativ schnell wiederbelastet wird.

Im folgenden wird die Erfindung anhand bevorzugter Ausführungsbeispiele unter Bezugnahme auf die beigefügten, teilweise schematischen Zeichnungen näher erläutert. Darin zeigen:
- Fig. 1: eine abgebrochene Längsschnittansicht eines erfindungsgemäßen Unterdruck-Bremskraftverstärkers nach einem ersten Ausführungsbeispiel,
- Fig. 2: eine vergrößerte Darstellung des Details X in Fig. 1,
- Fig. 3: einen ausgangsseitigen Druckstößel und ein daran an definierter Stelle festlegbares, einen federnden Anschlag für den Arbeitskolben des Unterdruck-Bremskraftverstärkers ausbildendes Bundteil des Unterdruck-Bremskraftverstärkers gemäß dem ersten Ausführungsbeispiel in einer perspektivischen Explosionsdarstellung,
- Fig. 4: eine abgebrochene, vergrößerte Längsschnittansicht eines erfindungsgemäßen Unterdruck-Bremskraftverstärkers nach einer Variante des ersten Ausführungsbeispiels, bei der die axiale Lage des Anschlags für den Arbeitskolben des Unterdruck-Bremskraftverstärkers auf andere Weise eingestellt wird,
- Fig. 5: eine hinsichtlich des Ausschnitts der Darstellung der Fig. 2 entsprechende Detailschnittansicht eines erfindungsgemäßen Unterdruck-Bremskraftverstärkers nach einem zweiten Ausführungsbeispiel,
- Fig. 6: eine der Fig. 5 entsprechende Detailschnittansicht des Unterdruck-Bremskraftverstärkers gemäß dem zweiten Ausführungsbeispiel mit einer ersten Variante des Reaktionsglieds,
- Fig. 7: eine der Fig. 5 entsprechende Detailschnittansicht des Unterdruck-Bremskraftverstärkers gemäß dem zweiten Ausführungsbeispiel mit einer zweiten Variante des Reaktionsglieds und
- Fig. 8: die "dual rate"-Kennung eines erfindungsgemäßen Unterdruck-Bremskraftverstärkers als Verlauf des Bremsdrucks p über der Eingangs- bzw. Pedalkraft F in einer idealisierten Darstellung, wobei die durchgezogene Linie die Kennung mit einem "trockenen" Reaktionsglied und die gestrichelte Linie die Kennung mit einem "geschmierten" Reaktionsglied repräsentiert.

An dieser Stelle sei vorab zu den Zeichnungen noch angemerkt, daß sämtliche gummielastischen Bauteile der gezeigten Unterdruck-Bremskraftverstärker zur Vereinfachung der Darstellung im unverformten Zustand dargestellt sind.

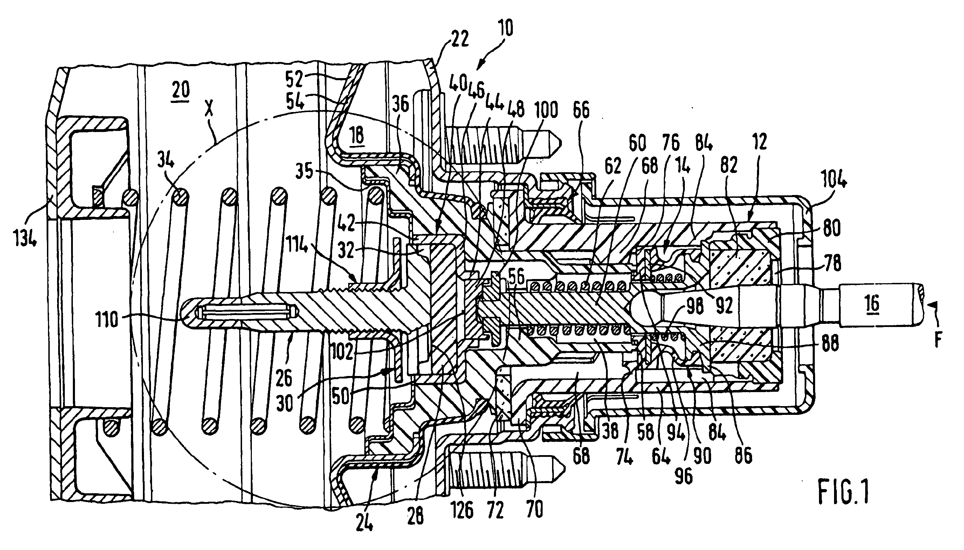

Die Fig. 1 zeigt einen ansprechweglosen Unterdruck-Bremskraftverstärker 10 einer Hilfskraft-Bremsanlage für Kraftfahrzeuge, der auf seiner in Fig. 1 linken Seite, d.h. ausgangsseitig an einen Hauptzylinder in Einfach- oder Tandem-Bauweise und auf seiner in Fig. 1 rechten Seite, d.h. eingangsseitig an ein Bremspedal anschließbar ist. Der in konventioneller Weise mit Radbremszylindern verbundene Hauptzylinder und das Bremspedal sind wie im Stand der Technik bekannt ausgebildet und aus Gründen der Übersichtlichkeit in den Figuren nicht dargestellt. Der Unterdruck-Bremskraftverstärker 10 selbst ist nur insoweit gezeigt, als es für das Verständnis der vorliegenden Erfindung erforderlich erscheint.

Der Unterdruck-Bremskraftverstärker 10 hat einen Steuerkolben 12 als Eingangsglied, mittels dessen eine Ventilanordnung 14 über eine an dem Bremspedal (nicht gezeigt) angelenkte Kolbenstange 16 mit einer Eingangskraft F ansteuerbar ist, um eine Arbeitskammer 18 wahlweise mit der Umgebung oder mit einer Unterdruckkammer 20 zu verbinden. Die Unterdruckkammer 20 ist von der Arbeitskammer 18 in einem Gehäuse 22 durch einen Arbeitskolben 24 getrennt, der zur Erzeugung eines Bremsdrucks p über ein Ausgangsglied in Form eines Druckstößels 26 mit dem Hauptzylinder (nicht dargestellt) wirkverbunden werden kann. An dem Arbeitskolben 24 ist auf noch zu beschreibende Weise ein Reaktionsglied in Form einer elastomeren, gummielastischen Reaktionsscheibe 28 vorgesehen, über die eine bremsdruckabhängige Reaktionskraft in den Steuerkolben 12 eingekoppelt werden kann, die somit am Bremspedal spürbar ist. Weiterhin ist am Druckstößel 26 ein Anschlag 30 angebracht, der bei einer vorbestimmten Eingangskraft F an dem Arbeitskolben 24 zur Anlage gelangt, um ein Übersetzungsverhältnis des Unterdruck-Bremskraftverstärkers 10 zu ändern. Wesentlich ist, daß, wie nachfolgend noch näher erläutert werden wird, angrenzend an die Reaktionsscheibe 28 wenigstens ein Volumenaufnehmer bzw. Freiraum 32 angeordnet ist, in den bei einer Betätigung des Unterdruck-Bremskraftverstärkers 10 ein Teil der Reaktionsscheibe 28 drängbar ist, und daß der Anschlag 30 und/oder - in einer hier nicht gezeigten geometrischen Umkehr - der Arbeitskolben 24 im Anlagebereich für den Anschlag 30 federnd ausgebildet ist, so daß bei Anlage des Anschlags 30 am Arbeitskolben 24 noch eine Relativbewegung zwischen dem Ausgangsglied 26 und dem Arbeitskolben 24 möglich ist.

Der mittels einer in der Unterdruckkammer 20 angeordneten Rückstellfeder 34 gegenüber dem Gehäuse 22 in Fig. 1 nach rechts vorgespannte Arbeitskolben 24 hat ein mit einem Federteller 35 verstärktes Steuergehäuse 36 aus Kunststoff, in dem ein gestuftes Durchgangsloch 38 ausgebildet ist. In das Durchgangsloch 38 ist ein metallisches, vorzugsweise tiefgezogenes Einsatzteil 40 fest eingesetzt, welches zwei hohlzylindrische Abschnitte 42, 44 verschiedenen Durchmessers aufweist, die über einen Ringschulterabschnitt 46 miteinander verbunden sind. Der in Fig. 1 linke, durchmessergrößere hohlzylindrische Abschnitt 42 des Einsatzteils 40 des Arbeitskolbens 24 dient der radial formschlüssigen Aufnahme der am Ringschulterabschnitt 46 des Einsatzteils 40 anliegenden Reaktionsscheibe 28 und zugleich der radialen Führung des Druckstößels 26, während der in Fig. 1 rechte, durchmesserkleinere hohlzylindrische Abschnitt 44 des Einsatzteils 40 der radialen Führung einer dem Steuerkolben 12 zugeordneten Übersetzungsscheibe 48 dient. Außerdem bildet im dargestellten Ausführungsbeispiel die in Fig. 1 linke, ringförmige Stirnfläche 50 des Einsatzteils 40 eine Anlagefläche für den Anschlag 30 am Druckstößel 26 aus.

Radial außen ist am Steuergehäuse 36 des Arbeitskolbens 24 ein metallischer Membranteller 52 befestigt, so daß das Steuergehäuse 36, das Einsatzteil 40 und der Membranteller 52 eine Einheit ausbilden, die im Gehäuse 22 in Achsrichtung des Unterdruck-Bremskraftverstärkers 10 bewegbar ist. Am Außenumfang des Arbeitskolbens 24 liegt pneumatisch dicht eine elastische Membran 54 an, die an ihrem Außenumfang ebenfalls pneumatisch dicht am Gehäuse 22 befestigt ist (nicht dargestellt).

In Fig. 1 nicht gezeigt, weil nicht in der dort dargestellten Schnittebene liegend, sind Verbindungskanäle, die um das Einsatzteil 40 herum in dem Steuergehäuse 36 des Arbeitskolbens 24 ausgebildet sind und dazu dienen, die Unterdruckkammer 20 stets mit dem in Fig. 1 rechts vom Einsatzteil 40 liegenden Bereich des Durchgangslochs 38 pneumatisch zu verbinden. Der Arbeitskolben 24 ist weiterhin am Innenumfang des Durchgangslochs 38 im Steuergehäuse 36 mit mehreren Längsrippen 56 versehen, die u.a. der Aussteifung des Steuergehäuses 36 dienen. Die in Fig. 1 rechte Stirnseite des Steuergehäuses 36 bildet schließlich einen ringförmigen ersten Ventilsitz 58 der Ventilanordnung 14 aus.

Der ebenfalls in Achsrichtung des Unterdruck-Bremskraftverstärkers 10 sowie relativ zum Arbeitskolben 24 bewegbare Steuerkolben 12 hat ein an die Kolbenstange 16 angeschlossenes Druckstück 60, welches in das Durchgangsloch 38 im Steuergehäuse 36 des Arbeitskolbens 24 eintaucht. Das Druckstück 60 ist mittels einer am Außenumfang des Druckstücks 60 in dem Durchgangsloch 38 des Steuergehäuses 36 angeordneten Ventilfeder 62 der Ventilanordnung 14 gegenüber den Längsrippen 56 des Steuergehäuses 36 verspannt, die das Druckstück 60 an dessen Außenumfang führen. Im Ergebnis beaufschlagt die Ventilfeder 62 den Steuerkolben 12 mit einer Kraft, die bestrebt ist, den Steuerkolben 12 vom Arbeitskolben 24 wegzudrücken.

Der Steuerkolben 12 weist ferner eine hohlzylindrische Hülse 64 aus Kunststoff auf, die an ihrem Außenumfang in einer am Gehäuse 22 vorgesehenen Dichtungsanordnung 66 pneumatisch dicht geführt ist. Die Hülse 64 hat am Innenumfang ihres in Fig. 1 linken Endes mehrere in Umfangsrichtung gleichmäßig verteilte, schmale Längsrippen 68, über die die Hülse 64 am Außenumfang des Steuergehäuses 36 des Arbeitskolbens 24 geführt ist.

Ein am in Fig. 1 linken Ende der Hülse 64 ausgebildeter Bund 70, der sich nach radial außen erstreckt, dient im Zusammenwirken mit der Dichtungsanordnung 66 als Anschlag gegen ein Herausziehen bzw. -drücken des Steuerkolbens 12 aus dem Gehäuse 22. Zwischen der in Fig. 1 linken Stirnfläche des Bunds 70 der Hülse 64 und der dieser gegenüberliegenden, in Fig. 1 rechten Stirnfläche des Steuergehäuses 36 des Arbeitskolbens 24 ist ein luftdurchlässiges, elastisches Filterteil 72 angeordnet, welches im Betrieb des Unterdruck-Bremskraftverstärkers 10 der Verminderung von Strömungsgeräuschen dient.

Anschließend an die Längsrippen 68 hat die Hülse 64 weiterhin im wesentlichen mittig einen sich nach radial innen erstreckenden Bund 74, an dessen von der Arbeitskammer 18 abgewandten Seite eine Ringschulter vorgesehen ist, die einen zweiten Ventilsitz 76 der Ventilanordnung 14 ausbildet, welcher einen größeren Durchmesser hat als der erste Ventilsitz 58.

Auf der in Fig. 1 rechten Seite der Hülse 64 ist an deren Innenumfang ein mit einer in Achsrichtung des Unterdruck-Bremskraftverstärkers 10 durchgehenden Stufenbohrung 78 versehenes Endstück 80 aus Kunststoff befestigt. Im durchmessergrößeren Abschnitt der Stufenbohrung 78 ist ein weiteres luftdurchlässiges Filterteil 82 angebracht, das eng an der durch die Stufenbohrung 78 hindurch geführten Kolbenstange 16 anliegt. Zwischen dem in Fig. 1 linken Ende des Endstücks 80 und den sich in Fig. 1 nach rechts an den Bund 74 anschließenden, weiteren Längsrippen 84 der Hülse 64 ist ein Ringabschnitt 86 eines endseitigen Bunds 88 des Druckstücks 60 aufgenommen, so daß das Endstück 80 die Hülse 64 am Druckstück 60 formschlüssig festlegt. Im Ergebnis sind das Druckstück 60, die Hülse 64 und das mit dem Filterteil 82 versehene Endstück 80 über die Kolbenstange 16 als eine Einheit in Achsrichtung des Unterdruck-Bremskraftverstärkers 10 verschiebbar.

Die ein Doppelsitzventil ausbildende, auch als Folgesteuerventil bezeichnete Ventilanordnung 14 hat des weiteren ein in Achsrichtung des Unterdruck-Bremskraftverstärkers 10 zwischen dem Bund 88 des Druckstücks 60 und den Ventilsitzen 58, 76 angeordnetes elastisches Ventilteil 90, das mittels einer gelochten Scheibe 92 ausgesteift ist. Das Ventilteil 90 weist auf der den Ventilsitzen 58, 76 zugewandten Seite der Scheibe 92 einen mit den Ventilsitzen 58, 76 zusammenwirkenden Dichtabschnitt 94 auf und hat auf der gegenüberliegenden Seite der Scheibe 92 einen Balgabschnitt 96, der am Bund 88 des Druckstücks 60 unter Zuhilfenahme der Längsrippen 84 der Hülse 64 befestigt ist. Der Balgabschnitt 96 umgibt eine weitere am Außenumfang des Druckstücks 60 angeordnete Ventilfeder 98, die sich auf ihrer in Fig. 1 rechten Seite am Bund 88 des Druckstücks 60 abstützt und unter Anlage an der Scheibe 92 das Ventilteil 90 in Richtung der Ventilsitze 58, 76 vorspannt.

Liegt der Dichtabschnitt 94 des Ventilteils 90 am radial äußeren zweiten Ventilsitz 76 an, während er vom radial inneren ersten Ventilsitz 58 axial beabstandet ist, so ist die Unterdruckkammer 20 über die nicht gezeigten Verbindungskanäle im Steuergehäuse 36 des Arbeitskolbens 24, die durch die Längsrippen 56 im Durchgangsloch 38 des Steuergehäuses 36 ausgebildeten Kanäle, den Ringspalt zwischen dem ersten Ventilsitz 58 und dem Dichtabschnitt 94 des Ventilteils 90 und die durch die Längsrippen 68 der Hülse 64 ausgebildeten Kanäle über das Filterteil 72 mit der Arbeitskammer 18 verbunden. Liegt hingegen der Dichtabschnitt 94 des Ventilteils 90 am ersten Ventilsitz 58 an, während er vom zweiten Ventilsitz 76 axial beabstandet ist, so ist die Arbeitskammer 18 über das Filterteil 72, die durch die Längsrippen 68 der Hülse 64 ausgebildeten Kanäle, den Ringspalt zwischen dem zweiten Ventilsitz 76 und dem Dichtabschnitt 94 des Ventilteils 90, die durch die Längsrippen 84 der Hülse 64 ausgebildeten Kanäle und das Filterteil 82 in der Stufenbohrung 78 des Endstücks 80 mit der Umgebung verbunden. In der in Fig. 1 dargestellten Fahrstellung des Unterdruck-Bremskraftverstärkers 10 liegt der Dichtabschnitt 94 des Ventilteil 90 an beiden Ventilsitzen 58, 76 an, so daß die Ventilanordnung 14 die Unterdruckkammer 20 von der Arbeitskammer 18 und letztere von der Umgebung trennt.

Auf der in Fig. 1 linken Seite des Druckstücks 60 ist schließlich eine Druckscheibe 100 befestigt, im dargestellten Ausführungsbeispiel mittels einer Nietverbindung. Auf der in Fig. 1 linken Seite der Druckscheibe 100 liegt die Übersetzungsscheibe 48 an der Druckscheibe 100 aus Montagegründen lose an. In der in Fig. 1 dargestellten Fahrstellung des Unterdruck-Bremskraftverstärkers 10 ist die an ihrem zylindrischen Außenumfang in dem durchmesserkleineren hohlzylindrischen Abschnitt 44 des Einsatzteils 40 in axialer Richtung des Unterdruck-Bremskraftverstärkers 10 beweglich geführte Übersetzungsscheibe 48 mit ihrer der Reaktionsscheibe 28 zugewandten, im dargestellten Ausführungsbeispiel ebenen Stirnfläche 102 um einen geringen Betrag von der Reaktionsscheibe 28 beabstandet.

Bliebe zum allgemeinen Aufbau des Unterdruck-Bremskraftverstärkers 10 noch anzumerken, daß zum Schutz der am Außenumfang der Hülse 64 des Steuerkolbens 12 ausgebildeten, mit der Dichtungsanordnung 66 am Gehäuse 22 zusammenwirkenden Lauffläche der Hülse 64 eine Schutzhülse 104 vorgesehen ist, welche die Hülse 64 konzentrisch umgibt und am Gehäuse 22 befestigt ist.

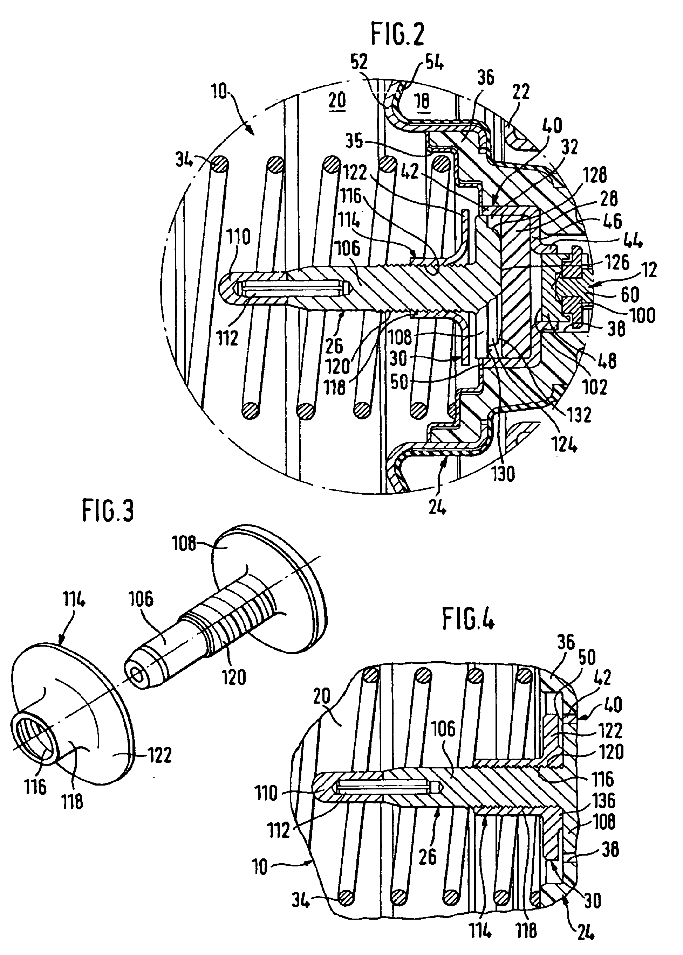

Der Fig. 2 sind weitere Einzelheiten zu dem eingangs bereits angesprochenen, angrenzend an der im dargestellten Ausführungsbeispiel vollzylindrischen Reaktionsscheibe 28 vorgesehenen Volumenaufnehmer bzw. Freiraum 32, in den bei einer Betätigung des Unterdruck-Bremskraftverstärkers 10 ein Teil der Reaktionsscheibe 28 drängbar ist, sowie zu der federnden Ausbildung des am Druckstößel 26 vorgesehenen Anschlags 30 zu entnehmen.

Gemäß den Fig. 2 und 3 hat der Druckstößel 26 einen metallischen Druckstößelschaft 106, an dessen in Fig. 2 rechten Ende sich in einstückiger Ausbildung ein Druckstößelteller 108 anschließt, der an der Reaktionsscheibe 28 anliegt. An dem in Fig. 2 linken Ende des Druckstößelschafts 106 ist ein gehärteter Druckpilz 110 mittels einer Spannhülse 112 oder einer Schraube befestigt, über den der Druckstößel 26 mit dem Hauptzylinder (nicht dargestellt) wirkverbunden werden kann.

Der Anschlag 30 ist bei diesem Ausführungsbeispiel durch ein am Druckstößelschaft 106 befestigtes, federnd biegbares Bundteil 114 ausgebildet. Hierzu weist das vorzugsweise aus Federstahl bestehende Bundteil 114 einen mit einem Innengewinde 116 versehenen Hülsenabschnitt 118 auf, der auf ein am Druckstößelschaft 106 nahe dem Druckstößelteller 108 ausgebildetes Außengewinde 120 aufgeschraubt ist. Mittels dieser Schraubverbindung ist der Anschlag 30 beim Zusammenbau des Unterdruck-Bremskraftverstärkers 10 hinsichtlich seiner axialen Lage auf dem Druckstößelschaft 106 einstellbar, wie noch beschrieben werden wird. Um den einmal eingestellten Anschlag 30 in seiner definierten Lage auf dem Druckstößelschaft 106 zusätzlich zu sichern, können weitere Sicherungsmaßnahmen getroffen sein. So kann der Hülsenabschnitt 118 des Bundteils 114 in dessen eingestellter Lage mit dem Druckstößelschaft 106 verkrimpt werden. Auch ist es möglich, den Hülsenabschnitt 118 des Bundteils 114 wie eine selbstsichernde Mutter mit einem Kunststoffeinsatz (nicht dargestellt) zu versehen, in den sich das Außengewinde 120 am Druckstößelschaft 106 bei der Montage des Bundteils 114 auf dem Druckstößelschaft 106 einschneidet, oder die Schraubverbindung zwischen dem Druckstößelschaft 106 und dem Bundteil 114 mit einem Klebstoff zu sichern.

Von dem in Fig. 2 rechten Ende des Hülsenabschnitts 118 des Bundteils 114 erstreckt sich nach radial außen ein ringförmiger, federnd biegbarer Bundabschnitt 122 weg, der im Betrieb des Unterdruck-Bremskraftverstärkers 10 mit einem radial äußeren Rand seiner dem Druckstößelteller 108 zugewandten Stirnfläche an der ringförmigen Stirnfläche 50 des Einsatzteils 40 im Arbeitskolben 24 federnd zur Anlage gelangen kann, um das Übersetzungsverhältnis des Unterdruck-Bremskraftverstärkers 10 zu ändern.

Bei dem in den Fig. 1 bis 3 dargestellten ersten Ausführungsbeispiel ist der Volumenaufnehmer bzw. Freiraum 32 ausgangsgliedseitig vorgesehen, wozu der Druckstößelteller 108 auf seiner der Reaktionsscheibe 28 zugewandten Seite mit einem gegenüber dem Rest des Druckstößeltellers 108 durchmesserkleineren Absatz 124 versehen ist, der mit seiner Stirnfläche 126 flächig an der Reaktionsscheibe 28 anliegt. Der Absatz 124 begrenzt mit seiner sich in Richtung des Druckstößelschafts 106 geringfügig konisch erweiternden Außenumfangsfläche 128 den ringförmigen Freiraum 32 nach radial innen. Nach radial außen wird der Freiraum 32 durch die Innenumfangsfläche des durchmessergrößeren hohlzylindrischen Abschnitts 42 des Einsatzteils 40 im Arbeitskolben 24 begrenzt. Die Höhe bzw. Dicke des Absatzes 124 ist so gewählt, daß der im Betrieb des Unterdruck-Bremskraftverstärkers 10 in den Freiraum 32 ge- bzw. verdrängte Teil der Reaktionsscheibe 28 nicht an der gegenüber dem Absatz 124 nach radial außen überstehenden Ringfläche 130 des Druckstößeltellers 108 zur Anlage kommen kann, die den Freiraum 32 in der Kraftrichtung, d.h. in Fig. 2 nach links begrenzt. Zwischen der Stirnfläche 126 und der Außenumfangsfläche 128 des Absatzes 124 ist schließlich eine Schräge 132 vorgesehen, die das Fließen bzw. Setzen der Reaktionsscheibe 28 unter Last begünstigt und reaktionsgliedschonende, weil stumpfe Winkel zur Stirnfläche 126 und zur Außenumfangsfläche 128 des Absatzes 124 schafft.

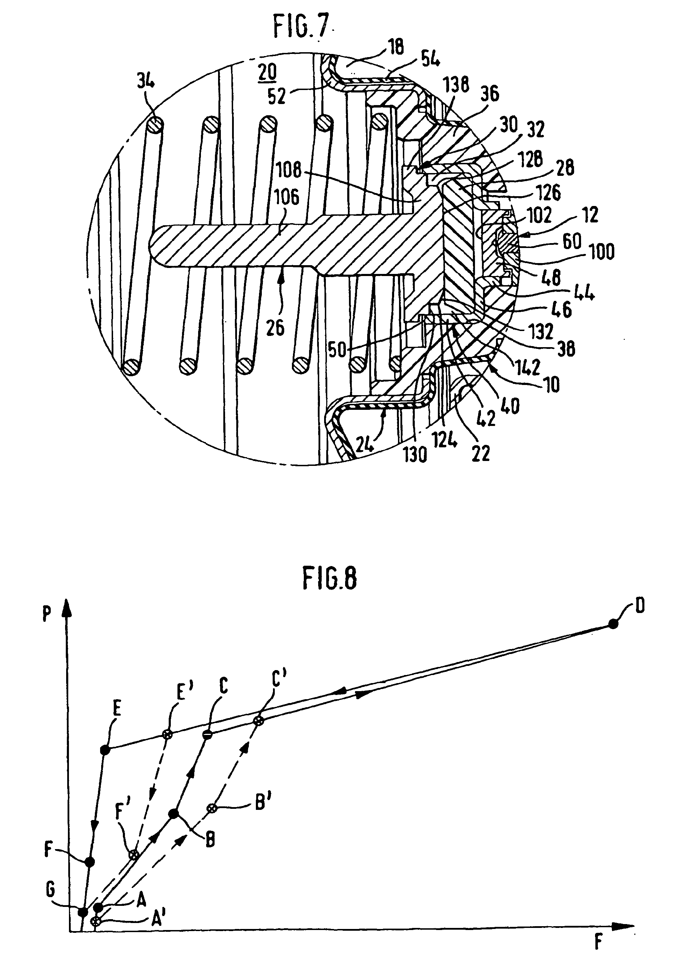

Im folgenden wird die Funktionsweise des unter Bezugnahme auf die Fig. 1 bis 3 beschriebenen Unterdruck-Bremskraftverstärkers 10 erläutert, wobei auch auf die Fig. 8 Bezug genommen wird. Vorab sei angemerkt, daß die in Fig. 8 dargestellten "dual rate"-Kennungen idealisiert und in Wirklichkeit insbesondere im Bereich der Knicke stärker verrundet sind.

Wird auf das Bremspedal und somit auf die Kolbenstange 16 keine Eingangskraft F ausgeübt, so verschiebt bzw. drückt die Rückstellfeder 34 ohne an die Unterdruckkammer 20 beispielsweise vom Saugrohr eines Ottomotors angelegtes Vakuum den Arbeitskolben 24 in Fig. 1 nach rechts. Der an dem Arbeitskolben 24 ausgebildete erste, im vorliegenden Ausführungsbeispiel radial innere Ventilsitz 58 hebt dabei das Ventilteil 90 der Ventilanordnung 14 gegen die Kraft der Ventilfeder 98 vom zweiten, im vorliegenden Ausführungsbeispiel radial äußeren Ventilsitz 76 am Steuerkolben 12 ab.

Wird nun ein Vakuum an die Unterdruckkammer 20 angelegt, baut sich zwischen der Unterdruckkammer 20 und der über die noch geöffnete Ventilanordnung 14 mit der Umgebung und somit Atmosphärendruck verbundenen Arbeitskammer 18 eine Druckdifferenz auf. Diese Druckdifferenz übt über die Fläche des Membrantellers 52 eine in Fig. 1 nach links gerichtete Kraft aus. Sobald diese Kraft soweit angestiegen ist, daß sie größer ist als die Vorspannkräfte der Rückstellfeder 34 und einer Feder im Hauptzylinder, bewegt sich der Arbeitskolben 24 und damit der auf dem ersten Ventilsitz 58 aufliegende Dichtabschnitt 94 des Ventilteils 90 nach links in Fig. 1. Diese Bewegung erfolgt so lange, bis der Dichtabschnitt 94 des Ventilteils 90 am zweiten Ventilsitz 76 am Steuerkolben 12 zur Anlage kommt und somit die Arbeitskammer 18 von der Umgebung abtrennt.

Der weiter sinkende Druck in der Unterdruckkammer 20 bewirkt, daß der erste Ventilsitz 58 vom Dichtabschnitt 94 des Ventilteils 90 leicht abhebt und somit auch die Arbeitskammer 18 evakuiert wird. Dieser Vorgang dauert so lange, bis in der Unterdruckkammer 20 der volle vom Ottomotor gelieferte Unterdruck herrscht. Zwischen der Unterdruckkammer 20 und der Arbeitskammer 18 herrscht jetzt nur noch eine geringe Druckdifferenz; der Unterdruck-Bremskraftverstärker 10 befindet sich in der in den Fig. 1 und 2 dargestellten Fahr- oder Betriebsstellung, in der der Dichtabschnitt 94 des Ventilteils 90 an den Ventilsitzen 58, 76 aufschwimmt. In dieser Stellung ist die Stirnfläche 102 der im Einsatzteil 40 des Arbeitskolbens 24 geführten Übersetzungsscheibe 48 noch von der Reaktionsscheibe 28 beabstandet oder liegt lose an der Reaktionsscheibe 28 an. Ausgangsseitig ist der Anschlag 30 an dem an der Reaktionsscheibe 28 anliegenden Druckstößel 26 von der in Fig. 1 linken Stirnfläche 50 des Einsatzteils 40 im Arbeitskolben 24 definiert beabstandet.

Bei Betätigung des Bremspedals wird nun der Steuerkolben 12 über die Kolbenstange 16 in Fig. 1 nach links verschoben und der zweite Ventilsitz 76 hebt von dem Dichtabschnitt 94 des Ventilteils 90 ab. Mit der in die Arbeitskammer 18 von der Umgebung einströmenden Außenluft erhöht sich die Druckdifferenz am Arbeitskolben 24. Die Druckdifferenz bewirkt eine Kraft, die über die ringförmig auf dem Ringschulterabschnitt 46 des Einsatzteils 40 im Arbeitskolben 24 aufliegende Reaktionsscheibe 28 und den Druckstößel 26 auf den federvorgespannten Hauptzylinder übertragen wird. Hierdurch wird die Reaktionsscheibe 28 von links in Fig. 1 durch die Stirnfläche 126 am Absatz 124 des Druckstößels 26 vollflächig und von rechts an der Auflage am Ringschulterabschnitt 46 des Einsatzteils 40 ringförmig mit Druck beaufschlagt, wobei es zu einer Verformung der elastomeren Reaktionsscheibe 28 kommt. Ein kleiner Teil der Reaktionsscheibe 28 wird hier bereits in den ringförmigen Freiraum 32 gedrängt, während ein weiterer Teil der Reaktionsscheibe 28 im Zentrum des Arbeitskolbens 24 in Richtung der Stirnfläche 102 der Übersetzungsscheibe 48 ausweicht, die über das Druckstück 60 und die Druckscheibe 100 ggf. in Richtung der Reaktionsscheibe 28 geschoben wurde.

Der Punkt A in Fig. 8 repräsentiert den auch als Drucksprung bezeichneten Zustand des Unterdruck-Bremskraftverstärkers 10, in dem die Stirnfläche 102 der Übersetzungsscheibe 48 vollflächig und mit Druck an der Reaktionsscheibe 28 zur Anlage gelangt und die Servounterstützung des Unterdruck-Bremskraftverstärkers 10 einsetzt, wodurch die Kennung unter einer Neigung, die u.a. durch das innere Übersetzungsverhältnis des Unterdruck-Bremskraftverstärkers 10, d.h. im unteren Bereich der "dual rate"-Kennung das Flächenverhältnis der Stirnflächen 126, 102 am Druckstößel 26 bzw. an der Übersetzungsscheibe 48 bestimmt wird, weiter verläuft. Über die Anlage der Übersetzungsscheibe 48 an der Reaktionsscheibe 28 wird der über die Druckscheibe 100 an der Übersetzungsscheibe 48 anliegende Steuerkolben 12 relativ zum Steuergehäuse 36 des Arbeitskolbens 24 verschoben, bis die Ventilanordnung 14 am zweiten Ventilsitz 76 wieder schließt. Es stellt sich ein Kräftegleichgewicht zwischen Druckstößel- und Rückstellkraft einerseits, und der auf den Arbeitskolben 24 wirkenden Servokraft sowie der über die Druckscheibe 100 wirkenden Eingangskraft F andererseits ein. Durch kurze Öffnung des zweiten Ventilsitzes 76 hat sich in der Arbeitskammer 18 ein Mischdruck eingestellt. Der Bremsdruck p kann nun in proportionaler Abhängigkeit zur Pedal- bzw. Eingangskraft F zwischen A und B eingestellt werden, wobei das Ventilteil 90 bei konstanter Eingangsgröße an den Ventilsitzen 58, 76 aufschwimmt.

Mit zunehmender Eingangskraft F wird ein weiterer Teil der Reaktionsscheibe 28 in den Freiraum 32 ver- bzw. gedrängt, so daß der Abstand zwischen der Stirnfläche 126 am Druckstößel 26 und der der Reaktionsscheibe 28 zugewandten Ringfläche am Ringschulterabschnitt 46 des Einsatzteils 40 im Arbeitskolben 24 abnimmt, d.h. die Reaktionsscheibe 28 im Hauptteil "dünner" wird. Infolge dessen nähert sich der Anschlag 30 am Druckstößel 26 der Stirnfläche 50 am Einsatzteil 40 bis er bei einer vorbestimmten Eingangskraft F daran zur Anlage gelangt. Dieser Zustand wird in Fig. 8 durch den Punkt B repräsentiert.

Aufgrund der Anlage des Anschlags 30 an der Stirnfläche 50 ändert sich das innere Übersetzungsverhältnis des Unterdruck-Bremskraftverstärkers 10, so daß dessen Kennung ab dem Punkt B steiler verläuft. Das Übersetzungsverhältnis wird allerdings nicht unendlich, d.h. der obere Bereich B-C der "dual rate"-Kennung verläuft nicht parallel zur p-Achse, weil der Anschlag 30 bei weiterer Erhöhung der Eingangskraft F und somit weiterer Erhöhung der Servokraft federnd nachgeben kann. Im weiteren Verlauf der Kennung ist also wiederum eine zur Eingangskraft F proportionale Erhöhung der Servokraft möglich, wobei im Verhältnis zum unteren Bereich A-B der "dual rate"-Kennung eine geringere Zunahme der Eingangskraft F ausreicht, eine deutlichere Erhöhung der Servounterstützung zu erzielen, wie es in Notbremssituationen gewünscht ist. Auch im oberen Bereich B-C der "dual rate"-Kennung wird mit zunehmender Eingangskraft F und somit zunehmender Servokraft ein weiterer Teil der Reaktionsscheibe 28 in den Freiraum 32 ver- bzw. gedrängt, ohne jedoch an der Ringfläche 130 des Druckstößeltellers 108 anzulangen, so daß - jetzt auch gegen die Federkraft des Bundabschnitts 122 des Bundteils 114 - eine weitere axiale Annäherung zwischen der Stirnfläche 126 am Druckstößel 26 und der der Reaktionsscheibe 28 zugewandten Ringfläche am Ringschulterabschnitt 46 des Einsatzteils 40 möglich ist. Das Ventilteil 90 wirkt hierbei weiterhin wie oben beschrieben mit den Ventilsitzen 58, 76 zusammen, um den Mischdruck in der Arbeitskammer 18 einzustellen.

Der Punkt C in Fig. 8 repräsentiert den sogenannten Aussteuerpunkt des Unterdruck-Bremskraftverstärkers 10, oberhalb dessen eine weitere Druckerhöhung nur noch über eine Steigerung der Eingangskraft F ohne weitere Zunahme der Servokraft möglich ist, weshalb die Kennung im Bereich C-D deutlich flacher verläuft. Erwähnt sei in diesem Zusammenhang, daß selbst im ausgesteuerten Zustand des Unterdruck-Bremskraftverstärkers 10 die Druckscheibe 100 am Druckstück 60 des Steuerkolbens 12 vom hohlzylindrischen Abschnitt 44 des Einsatzteils 40 im Arbeitskolben 24 beabstandet ist.

Wird nun beispielsweise bei D in Fig. 8 die Eingangskraft F zurückgenommen, läuft der Bremsdruck p mit Hysterese über E, F und G auf Null zurück. Dabei schiebt die Rückstellfeder 34 und anfangs, d.h. bis der Anschlag 30 bei F in Fig. 8 von der Stirnfläche 50 außer Eingriff kommt, auch der zurückfedernde Bundabschnitt 122 des Bundteils 114 den Arbeitskolben 24 in den Fig. 1 und 2 nach rechts in seine Grundstellung, während der Steuerkolben 12 durch die Ventilfeder 62 in Fig. 1 nach rechts verschoben wird, bis das Ventilteil 90 am zweiten Ventilsitz 76 zur Auflage kommt. Gleichzeitig hebt der erste Ventilsitz 58 vom Ventilteil 90 ab. Der Evakuiervorgang der Arbeitskammer 18 schließt sich an bis sich der Unterdruck-Bremskraftverstärker 10 wieder in seiner Fahr- oder Betriebsstellung befindet. Bei der Rücklaufbewegung von Arbeitskolben 24 und Steuerkolben 12 wird auch die Reaktionsscheibe 28 druckentlastet, die somit infolge ihres elastomer-eigenen Rückstellvermögens bestrebt ist, sich aus dem Freiraum 32 zurückzuziehen und wieder ihre ursprüngliche zylindrische Form anzunehmen. Bei G in Fig. 8 kommt die Übersetzungsscheibe 48 außer Druckeingriff von der Reaktionsscheibe 28. Im Ergebnis ist der Bremsdruck p im Bereich AB-C-E-F-G der Kennung mit Servounterstützung und zwei verschiedenen Übersetzungsverhältnissen ("dual rate") einstellbar.

Erläuternd sei in diesem Zusammenhang noch angemerkt, daß eine Zurücknahme der Eingangskraft F im unteren Bereich A-B der Kennung dazu führt, daß die Kennung auf einen Punkt im Kennungsbereich F-G "zurückläuft", während die Kennung bei einer Zurücknahme der Eingangskraft F im oberen Bereich B-C der Kennung auf einen Punkt im Kennungsbereich E-F "zurückläuft".

Die Fig. 8 veranschaulicht weiterhin, wie der Kennungsverlauf (p = f(F)) des Unterdruck-Bremskraftverstärkers 10 dadurch beeinflußt werden kann, daß die Reaktionsscheibe 28 nicht "trocken" in das Einsatzteil 40 im Arbeitskolben 24 eingesetzt wird, sondern vor dem Einsetzen mit einer Schmierpaste, etwa auf Fettbasis mit Festbestandteilen wie Teflon oder Graphit, geschmiert und/oder mit einer Gleitbeschichtung versehen wird und/oder dem Elastomer der Reaktionsscheibe 28 Gleitverbesserer beigemengt werden. Dieser "geschmierte" Zustand der Reaktionsscheibe 28 wird in Fig. 8 durch den (teilweise) gestrichelt dargestellten Kennungsverlauf A'-B'-C'-D-E'-F'-G repräsentiert.

Wie aus Fig. 8 ersichtlich, führt die oben angesprochene "Schmierung" der Reaktionsscheibe 28 zum einen zu einer gewissen Abflachung der Kennung. Zum anderen wird durch die "Schmierung" der Reaktionsscheibe 28 die Hysterese der Kennung schmaler, d.h. der Kennungsverlauf E'-F'-G bei Entlastung des Unterdruck-Bremskraftverstärkers 10 folgt - verglichen mit dem Kennungsverlauf bei "trockener" Reaktionsscheibe 28 - besser dem Kennungsverlauf A'-B'-C' bei Belastung des Unterdruck-Bremskraftverstärkers 10, wodurch ein besseres Pedalgefühl erzielt wird. Die schmalere Hysterese der Kennung mit "geschmierter" Reaktionsscheibe 28 ist darauf zurückzuführen, daß beim Verdrängen der Reaktionsscheibe 28 in den Freiraum 32 bzw. bei der selbsttätigen Rückverformung der Reaktionsscheibe 28 infolge ihres elastomer-eigenen Rückstellvermögens aufgrund des verminderten Reibungskoeffizienten geringere Reibkräfte an der Reaktionsscheibe 28 wirken.

Bei dem in den Fig. 1 bis 3 dargestellten Ausführungsbeispiel kann die Lage des "Knickpunkts" B der "dual rate"-Kennung in vorteilhafter Weise beim Zusammenbau des Unterdruck-Bremskraftverstärkers 10 mittels des Anschlags 30 eingestellt werden, wozu die Schraubverbindung 116, 120 zwischen dem Druckstößelschaft 106 und dem Hülsenabschnitt 118 des Bundteils 114 vorgesehen ist. Für die Einstellung des Anschlags 30 wird der bis auf das Bundteil 114 am Druckstößel 26 fertigmontierte Unterdruck-Bremskraftverstärker 10 in eine Vorrichtung (nicht dargestellt) eingelegt, die auf der Eingangsseite des Unterdruck-Bremskraftverstärkers 10 eine definierte, in axialer Richtung wirkende Eingangskraft an der Kolbenstange 16 aufbringen kann. Auf der Ausgangsseite des Unterdruck-Bremskraftverstärkers 10 wird das Gehäuse 22 an einem Flansch 134 für den Hauptzylinder abgedichtet, so daß ein Unterdruck an die Unterdruckkammer 20 angelegt werden kann. Der Druckstößel 26 wird am Druckpilz 110 mittels eines Anschlags (nicht dargestellt) der Vorrichtung abgestützt, der den Hauptzylinder mit dessen Reaktionskräften simuliert. Ferner weist die Vorrichtung einen den Druckstößel 26 umgebenden Schrauber (nicht dargestellt) auf, der sich durch den Flansch 134 des Gehäuses 22 hindurch in die Unterdruckkammer 20 hinein erstreckt und mittels dessen das Bundteil 114 gedreht werden kann.

Zur Einstellung des Anschlags 30 und damit des "Knickpunkts" B wird nun ein Unterdruck an die Unterdruckkammer 20 angelegt, und der Unterdruck-Bremskraftverstärker 10 wird mit der Eingangskraft F angesteuert, bei der die "dual rate"-Kennung von dem unteren Kennungsbereich A-B auf den oberen Kennungsbereich B-C umschalten soll. Hierbei arbeitet die Ventilanordnung 14 wie oben beschrieben, wodurch sich für die vorbestimmte Eingangskraft F ein Kräftegleichgewicht im Unterdruck-Bremskraftverstärker 10 einstellt, bei dem sich der Steuerkolben 12 und der Druckstößel 26 bezüglich des Arbeitskolbens 24 jeweils verlagert haben und die Reaktionsscheibe 28 eine dementsprechende Verformung erfahren hat. Nun wird das anfangs nur wenig auf das Außengewinde 120 am Druckstößelschaft 106 aufgeschraubte Bundteil 114 mittels des Schraubers gedreht und somit weiter auf den Druckstößelschaft 106 aufgeschraubt bis der Bundabschnitt 122 des Bundteils 114 an der Stirnfläche 50 des Einsatzteils 40 im Arbeitskolben 24 zur Anlage gelangt. Dies kann beispielsweise mittels einer Drehmomentüberwachung des Schraubers festgestellt werden. Ggf. ist nun noch das Bundteil 114 am Druckstößelschaft 106 gegen ein unbeabsichtigtes Verdrehen zu sichern, zum Beispiel durch Verkrimpen des Hülsenabschnitts 118 mit dem Druckstößelschaft 106. Davor oder danach kann die Kolbenstange 16 entlastet und der Unterdruck abgeschaltet werden, worauf der den jeweiligen Erfordernissen entsprechend fertig eingestellte Unterdruck-Bremskraftverstärker 10 aus der Vorrichtung entnommen werden kann. Diese Vorgehensweise hat u.a. den Vorteil, daß etwaige Form-, Lage- und/oder Werkstofftoleranzen insbesondere der Reaktionsscheibe 28 automatisch kompensiert werden. Eine aufwendige Versortierung etwa der Reaktionsscheiben 28 nach deren Maßhaltigkeit bzw. Eigenschaften ist somit entbehrlich.

Die Fig. 4 zeigt eine Variante des unter Bezugnahme auf die Fig. 1 bis 3 beschriebenen ersten Ausführungsbeispiels des Unterdruck-Bremskraftverstärkers 10, die nachfolgend nur insoweit beschrieben werden soll, als sie sich vom ersten Ausführungsbeispiel unterscheidet, wobei gleiche oder entsprechende Teile mit den gleichen Bezugszeichen versehen sind wie bei dem ersten Ausführungsbeispiel. Bei dieser Variante erfolgt insbesondere die axiale Einstellung des Anschlags 30 beim Zusammenbau des Unterdruck-Bremskraftverstärkers 10 auf eine andere Weise als oben beschrieben.

Hierfür ist der den Anschlag 30 bildende Bundabschnitt 122 des Bundteils 114 auf seiner dem Druckstößelteller 108 zugewandten Seite mit einem Absatz 136 versehen, der in dem in Fig. 4 gezeigten montierten Zustand des Bundteils 114 fest an der von der Reaktionsscheibe 28 abgewandten Seite des Druckstößeltellers 108 anliegt. Über die Höhe des Absatzes 136 wird hier der axiale Weg des Druckstößeltellers 108 eingestellt, den dieser aus seiner hier dargestellten Fahr- oder Betriebsstellung unter Verdrängung eines Teils der Reaktionsscheibe 28 in den Freiraum 32 zurücklegen kann bis der Bundabschnitt 122 an der Stirnfläche 50 des durchmessergrößeren hohlzylindrischen Abschnitts 42 des Einsatzteils 40 im Arbeitskolben 24 anschlägt, um das Übersetzungsverhältnis des Unterdruck-Bremskraftverstärkers 10 zu ändern.

Bei dieser Variante wird in der oben beschriebenen Vorrichtung für die Endmontage des Unterdruck-Bremskraftverstärkers 10 der Relativweg gemessen, den der Arbeitskolben 24 aus seiner Fahr- oder Betriebsstellung relativ zum Druckstößel 26 zurücklegt bis er eine Position eingenommen hat, in der an ihm ein Kräftegleichgewicht für die vorbestimmte Eingangskraft F herrscht, bei der die "dual rate"-Kennung vom unteren Kennungsbereich A-B auf den oberen Kennungsbereich B-C umschalten soll. Entsprechend dem gemessenen Relativweg des Arbeitskolbens 24 bezüglich des Druckstößels 26 wird nun in einer mit der Montagevorrichtung verketteten Werkzeugmaschine (nicht dargestellt) der Absatz 136 mit einer definierten Höhe an ein Halbzeug für das Bundteil 114 z.B. durch eine spanende Drehbearbeitung angearbeitet. Nach Herausnahme des Unterdruck-Bremskraftverstärkers 10 aus der Montagevorrichtung braucht nur noch das speziell für diesen Unterdruck-Bremskraftverstärker 10 fertig bearbeitete Bundteil 114 auf Anschlag am Druckstößelteller 108 auf den Druckstößel 26 aufgeschraubt und ggf. in dieser Position gegen ein unbeabsichtigtes Lösen gesichert zu werden, um den Unterdruck-Bremskraftverstärker 10 fertigzustellen. Auch hier werden etwaige Form-, Lage- und/oder Werkstofftoleranzen insbesondere der Reaktionsscheibe 28 somit automatisch kompensiert.

Das Bundteil 114 gemäß Fig. 4 hat im übrigen im Vergleich zum Bundteil 114 gemäß Fig. 2 einen in axialer Richtung dickeren - hier etwas übertrieben dick dargestellten - Bundabschnitt 122. Es ist ersichtlich, daß über die Dicke des Bundabschnitts 122 die federnden Eigenschaften des Anschlags 30 den jeweiligen Erfordernissen entsprechend eingestellt werden können, wodurch die Steigung der "dual rate"-Kennung im oberen Kennungsbereich B-C beeinflußt werden kann.

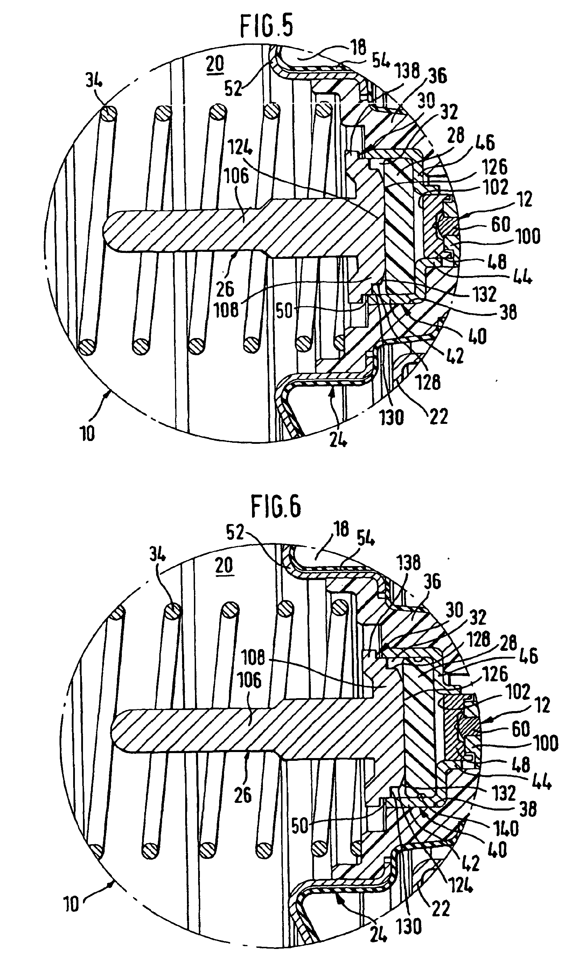

Die Fig. 5 bis 7 zeigen ein zweites Ausführungsbeispiel des Unterdruck-Bremskraftverstärkers 10, das nachfolgend nur insoweit beschrieben werden soll, als es sich vom ersten Ausführungsbeispiel unterscheidet, wobei gleiche oder entsprechende Teile mit den gleichen Bezugszahlen versehen sind wie bei dem ersten Ausführungsbeispiel. Das zweite Ausführungsbeispiel unterscheidet sich vom ersten Ausführungsbeispiel in der Ausgestaltung des Anschlags 30. Zudem veranschaulichen die Fig. 6 und 7 wie (auch) an der Reaktionsscheibe 28 wenigstens ein Volumenaufnehmer vorgesehen werden kann, während die in Fig. 5 gezeigte vollzylindrische Reaktionsscheibe 28 der Reaktionsscheibe 28 des ersten Ausführungsbeispiels entspricht.

Gemäß Fig. 5 handelt es sich bei dem Ausgangsglied des Unterdruck-Bremskraftverstärkers 10 um einen einteiligen, vorzugsweise metallischen Druckstößel 26, der ebenfalls einen mit dem Hauptzylinder wirkverbindbaren Druckstößelschaft 106 und einen an der Reaktionsscheibe 28 anliegenden Druckstößelteller 108 aufweist. Anstelle des Bundteils 114 beim ersten Ausführungsbeispiel ist bei dem zweiten Ausführungsbeispiel der - hier etwas übertrieben dick dargestellte - Druckstößelteller 108 federnd biegbar. Der an der Stirnfläche 50 des Einsatzteils 40 im Arbeitskolben 24 zur Anlage bringbare Anschlag 30 für die Umschaltung der "dual rate"-Kennung vom unteren Kennungsbereich A-B auf den oberen Kennungsbereich B-C wird bei dem zweiten Ausführungsbeispiel durch einen am Außenumfang des Druckstößeltellers 108 angebrachten Ringbund 138 ausgebildet.

Die Einstellung des Anschlagmaßes erfolgt hier analog der zur Variante des ersten Ausführungsbeispiels gemäß Fig. 4 beschriebenen Vorgehensweise. Demgemäß wird in der Vorrichtung für die Endmontage des Unterdruck-Bremskraftverstärkers 10 der Relativweg zwischen dem Arbeitskolben 24 und einem an der Reaktionsscheibe 28 anliegenden Anschlag, der den Druckstößel 26 simuliert, gemessen, den der Arbeitskolben 24 bei einer Bewegung aus der Fahr- oder Betriebsstellung in die Stellung, in der für die für die gewünschte Lage des "Knickpunkts" B benötigte Eingangskraft F wieder ein Kräftegleichwicht am Arbeitskolben 24 vorliegt, zurückgelegt hat. Entsprechend dem gemessenen Relativweg wird sodann in einer mit der Montagevorrichtung verketteten Werkzeugmaschine der Ringbund 138 mit einer vorbestimmten axialen Lage am Außenumfang des Druckstößeltellers 108 eines Halbzeugs für den Druckstößel 26 ausgebildet. Die Federwirkung des Anschlags 30 kann hierbei den jeweiligen Erfordernissen entsprechend durch die bei der Bearbeitung belassene Dicke des Druckstößeltellers 108 eingestellt werden. Nach Herausnahme des Unterdruck-Bremskraftverstärkers 10 aus der Montagevorrichtung braucht nur noch der speziell für diesen Unterdruck-Bremskraftverstärker 10 fertig bearbeitete Druckstößel 26 in den Unterdruck-Bremskraftverstärker 10 eingesetzt zu werden, um diesen fertigzustellen.

Die Fig. 6 zeigt das zweite Ausführungsbeispiel mit einer ersten Variante der Reaktionsscheibe 28, bei der es sich um eine im wesentlichen zylindrische Scheibe handelt, an deren am durchmessergrößeren hohlzylindrischen Abschnitt 42 des Einsatzteils 40 im Arbeitskolben 24 anliegenden Außenumfang eine umlaufende Ausnehmung 140 als weiterer Volumenaufnehmer ausgebildet ist, in den bei einer Druckbeaufschlagung der Reaktionsscheibe 28 ein Teil derselben gedrängt werden kann. Die umlaufende Ausnehmung 140, die zur Verbessung des Fließ- bzw. Setzverhaltens der Reaktionsscheibe 28 einen halbkreisförmigen Querschnitt aufweist, ist in axialer Richtung gesehen mittig angeordnet, so daß die Reaktionsscheibe 28 bezüglich einer gedachten, zu ihren Stirnseiten parallelen Ebene symmetrisch ausgebildet ist. Dies gestattet eine ungerichtete Montage der Reaktionsscheibe 28.

In der Fig. 7 ist schließlich das zweite Ausführungsbeispiel mit einer zweiten Variante der Reaktionsscheibe 28 dargestellt. Bei dieser Variante ist die Reaktionsscheibe 28 zu ihrer an der Stirnfläche 126 des Druckstößels 26 anliegenden Stirnfläche hin kegelstumpfförmig abgeschrägt, um anstelle der Ausnehmung 140 bei der unter Bezugnahme auf die Fig. 6 beschriebenen ersten Variante der Reaktionsscheibe 28 einen ringförmigen Freiraum 142 als weiteren Volumenaufnehmer auszubilden, der im Querschnitt gesehen eine Keilform aufweist.

Für den Fachmann ist ersichtlich, daß durch die Lage, die Anzahl, die Größe und/oder die Geometrie des/der Volumenaufnehmer(s) im Zusammenspiel mit den Werkstoffeigenschaften, insbesondere der Härte der elastomeren Reaktionsscheibe den jeweiligen Erfordernissen entsprechend auf einfache Weise Einfluß genommen werden kann auf das Fließ- bzw. Setzverhalten der Reaktionsscheibe und somit auf sowohl die Steigung der "dual rate"-Kennung als auch die Lage des "Knickpunkts" B der "dual rate"-Kennung. So kann/können der/die Volumenaufnehmer anders als in den oben beschriebenen Ausführungsbeispielen auch nur an der Reaktionsscheibe vorgesehen sein, während der Druckstößelteller eine plane, der Reaktionsscheibe zugewandte Stirnfläche aufweist, deren Außendurchmesser nur geringfügig kleiner ist als der Innendurchmesser des durchmessergrößeren hohlzylindrischen Abschnitts des Einsatzteils im Arbeitskolben. Tendenziell gilt, um so leichter sich die Reaktionsscheibe infolge des/der Volumenaufnehmer(s) verformen läßt, um so geringer ist die Eingangskraft F, bei der der Anschlag am Arbeitskolben zur Anlage gelangt und somit die "dual rate"-Kennung nach oben "abknickt". So "knickt" bei den Varianten gemäß den Fig. 6 und 7 die "dual rate"-Kennung bei einer geringeren Eingangskraft F nach oben ab als bei der Variante gemäß Fig. 5.

Obgleich oben lediglich Ausführungsbeispiele des Unterdruck-Bremskraftverstärkers 10 beschrieben wurden, die eine sogenannte "außengesteuerte" Ventilanordnung 14 aufweisen, d.h. bei denen der eingangsgliedseitige Ventilsitz 76 radial außen liegt, ist für den Fachmann ersichtlich, daß die beschriebene Ausgestaltung des Unterdruck-Bremskraftverstärkers 10 zur Erzeugung der "dual rate"-Kennung (Volumenaufnehmer für das Reaktionsglied / federnder, ggf. axial einstellbarer Anschlag) selbstverständlich auch bei Unterdruck-Bremskraftverstärkern eingesetzt werden kann, die eine sogenannte "innengesteuerte" Ventilanordnung haben, d.h. bei denen der eingangsgliedseitige Ventilsitz radial innen liegt, wie etwa im Stand der Technik gemäß der EP 0 705 190 B1 oder der EP 1 123 849 A2.

Es wird ein Unterdruck-Bremskraftverstärker offenbart, der ein Eingangsglied aufweist, mittels dessen eine Ventilanordnung mit einer Eingangskraft ansteuerbar ist, um eine Arbeitskammer wahlweise mit der Umgebung oder einer Unterdruckkammer zu verbinden. Letztere ist von der Arbeitskammer durch einen Arbeitskolben getrennt, der zur Erzeugung eines Bremsdrucks über ein Ausgangsglied mit einem Hauptzylinder wirkverbindbar ist. Am Arbeitskolben ist ein elastomeres Reaktionsglied vorgesehen, über das eine Reaktionskraft in das Eingangsglied einkoppelbar ist. Das Ausgangsglied hat einen Anschlag, der bei vorbestimmter Eingangskraft an dem Arbeitskolben zur Anlage gelangt, um ein Übersetzungsverhältnis des Unterdruck-Bremskraftverstärkers zu ändern. Erfindungsgemäß ist angrenzend an das Reaktionsglied wenigstens ein Volumenaufnehmer angeordnet, in den bei Betätigung des Unterdruck-Bremskraftverstärkers ein Teil des Reaktionsglieds drängbar ist. Des weiteren ist vorzugsweise der Anschlag federnd ausgebildet. Im Ergebnis wird ein einfach ausgebildeter, die funktionalen Nachteile des Stands der Technik vermeidender Unterdruck-Bremskraftverstärker mit "dual rate"-Kennung geschaffen.

### Bezugszeichenliste

- 10: Unterdruck-Bremskraftverstärker
- 12: Steuerkolben
- 14: Ventilanordnung
- 16: Kolbenstange
- 18: Arbeitskammer
- 20: Unterdruckkammer
- 22: Gehäuse
- 24: Arbeitskolben
- 26: Druckstößel
- 28: Reaktionsscheibe
- 30: Anschlag
- 32: Freiraum
- 34: Rückstellfeder
- 35: Federteller
- 36: Steuergehäuse
- 38: Durchgangsloch
- 40: Einsatzteil
- 42: hohlzylindrischer Abschnitt
- 44: hohlzylindrischer Abschnitt
- 46: Ringschulterabschnitt
- 48: Übersetzungsscheibe
- 50: Stirnfläche
- 52: Membranteller
- 54: Membran
- 56: Längsrippe
- 58: erster Ventilsitz
- 60: Druckstück
- 62: Ventilfeder
- 64: Hülse
- 66: Dichtungsanordnung
- 68: Längsrippe
- 70: Bund
- 72: Filterteil

- 74: Bund
- 76: zweiter Ventilsitz
- 78: Stufenbohrung
- 80: Endstück
- 82: Filterteil
- 84: Längsrippe
- 86: Ringabschnitt
- 88: Bund
- 90: Ventilteil
- 92: Scheibe
- 94: Dichtabschnitt
- 96: Balgabschnitt
- 98: Ventilfeder
- 100: Druckscheibe
- 102: Stirnfläche
- 104: Schutzhülse
- 106: Druckstößelschaft
- 108: Druckstößelteller
- 110: Druckpilz
- 112: Spannhülse
- 114: Bundteil
- 116: Innengewinde
- 118: Hülsenabschnitt
- 120: Außengewinde
- 122: Bundabschnitt
- 124: Absatz
- 126: Stirnfläche
- 128: Außenumfangsfläche
- 130: Ringfläche
- 132: Schräge
- 134: Flansch
- 136: Absatz
- 138: Ringbund
- 140: Ausnehmung
- 142: Freiraum

## Patentansprüche

1. Unterdruck-Bremskraftverstärker (10) für eine Hilfskraft-Bremsanlage für Kraftfahrzeuge, mit einem Eingangsglied (12), mittels dessen eine Ventilanordnung (14) mit einer Eingangskraft (F) ansteuerbar ist, um eine Arbeitskammer (18) wahlweise mit der Umgebung oder mit einer Unterdruckkammer (20) zu verbinden, die von der Arbeitskammer (18) durch einen Arbeitskolben (24) getrennt ist, der zur Erzeugung eines Bremsdrucks (p) über ein Ausgangsglied (26) mit einem Hauptzylinder wirkverbindbar ist und an dem ein elastomeres Reaktionsglied (28) vorgesehen ist, über das eine bremsdruckabhängige Reaktionskraft in das Eingangsglied (12) einkoppelbar ist, wobei das Ausgangsglied (26) einen Anschlag (30) aufweist, der bei einer vorbestimmten Eingangskraft (F) an dem Arbeitskolben (24) zur Anlage gelangt, um ein Übersetzungsverhältnis des Unterdruck-Bremskraftverstärkers (10) zu ändern, **dadurch gekennzeichnet, daß** angrenzend an das Reaktionsglied (28) wenigstens ein Volumenaufnehmer (32; 140; 142) angeordnet ist, in den bei einer Betätigung des Unterdruck-Bremskraftverstärkers (10) ein Teil des Reaktionsglieds (28) drängbar ist, und daß der Anschlag (30) und/oder der Arbeitskolben (24) im Anlagebereich für den Anschlag (30) federnd ausgebildet ist, so daß bei Anlage des Anschlags (30) am Arbeitskolben (24) noch eine Relativbewegung zwischen dem Ausgangsglied (26) und dem Arbeitskolben (24) möglich ist.

2. Unterdruck-Bremskraftverstärker (10) nach Anspruch 1, **dadurch gekennzeichnet, daß** wenigstens ein Volumenaufnehmer (32) am Ausgangsglied (26) vorgesehen ist.

3. Unterdruck-Bremskraftverstärker (10) nach Anspruch 2, **dadurch gekennzeichnet, daß** das Ausgangsglied (26) einen am Reaktionsglied (28) mit einer Stirnfläche (126) anliegenden Absatz (124) aufweist, dessen Außenumfangsfläche (128) einen ringförmigen Freiraum (32) als Volumenaufnehmer begrenzt.

4. Unterdruck-Bremskraftverstärker (10) nach Anspruch 3, **dadurch gekennzeichnet, daß** das Ausgangsglied (26) zwischen der Stirnfläche (126) und der Außenumfangsfläche (128) des Absatzes (124) mit einer Schräge (132) versehen ist.

5. Unterdruck-Bremskraftverstärker (10) nach einem der vorhergehenden Ansprüche, **dadurch gekennzeichnet, daß** wenigstens ein Volumenaufnehmer (140; 142) am Reaktionsglied (28) vorgesehen ist.

6. Unterdruck-Bremskraftverstärker (10) nach Anspruch 5, **dadurch gekennzeichnet, daß** es sich bei dem Reaktionsglied (28) um eine im wesentlichen zylindrische Scheibe handelt, an deren Außenumfang eine umlaufende Ausnehmung (140) als Volumenaufnehmer ausgebildet ist.

7. Unterdruck-Bremskraftverstärker (10) nach Anspruch 6, **dadurch gekennzeichnet, daß** die umlaufende Ausnehmung (140) einen halbkreisförmigen Querschnitt aufweist.

8. Unterdruck-Bremskraftverstärker (10) nach Anspruch 5, **dadurch gekennzeichnet, daß** es sich bei dem Reaktionsglied (28) um eine Scheibe handelt, die nach wenigstens einer ihrer Stirnseiten hin kegelstumpfförmig abgeschrägt ist, um einen ringförmigen Freiraum (142) als Volumenaufnehmer auszubilden.

9. Unterdruck-Bremskraftverstärker (10) nach einem der vorhergehenden Ansprüche, **dadurch gekennzeichnet, daß** es sich bei dem Reaktionsglied (28) um eine Scheibe handelt, die bezüglich einer gedachten, zu ihren Stirnseiten parallelen Ebene symmetrisch ausgebildet ist.

10. Unterdruck-Bremskraftverstärker (10) nach einem der vorhergehenden Ansprüche, **dadurch gekennzeichnet, daß** der Anschlag (30) heim Zusammenbau des Unterdruck-Bremskraftverstärkers (10) hinsichtlich seiner axialen Lage einstellbar ist.

11. Unterdruck-Bremskraftverstärker (10) nach einem der vorhergehenden Ansprüche, **dadurch gekennzeichnet, daß** es sich bei dem Ausgangsglied um einen Druckstößel (26) handelt, der einen mit dem Hauptzylinder wirkverbindbaren Druckstößelschaft (106) und einen am Reaktionsglied (28) anliegenden, federnd biegbaren Druckstößelteller (108) aufweist, wobei der Anschlag (30) durch einen am Druckstößelteller (108) angebrachten Ringbund (138) ausgebildet ist.

12. Unterdruck-Bremskraftverstärker (10) nach einem der Ansprüche 1 bis 10, **dadurch gekennzeichnet, daß** es sich bei dem Ausgangsglied um einen Druckstößel (26) handelt, der einen mit dem Hauptzylinder wirkverbindbaren Druckstößelschaft (106) und einen am Reaktionsglied (28) anliegenden Druckstößelteller (108) aufweist, wobei der Anschlag (30) durch ein am Druckstößelschaft (106) befestigtes, federnd biegbares Bundteil (114) ausgebildet ist.

13. Unterdruck-Bremskraftverstärker (10) nach Anspruch 12, **dadurch gekennzeichnet, daß** das Bundteil (114) einen mit einem Innengewinde (116) versehenen Hülsenabschnitt (118) aufweist, der auf ein am Druckstößelschaft (106) ausgebildetes Außengewinde (120) aufgeschraubt ist und von dem sich ein ringförmiger, federnd biegbarer Bundabschnitt (122) weg erstreckt.

14. Unterdruck-Bremskraftverstärker (10) nach Anspruch 12 oder 13, **dadurch gekennzeichnet, daß** das Bundteil (114) aus Federstahl besteht.

15. Unterdruck-Bremskraftverstärker (10) nach einem der vorhergehenden Ansprüche, **dadurch gekennzeichnet, daß** der Arbeitskolben (24) ein Einsatzteil (40) zur Aufnahme des Reaktionsglieds (28) aufweist, wobei das Einsatzteil (40) auch zur Führung des Eingangsglieds (12) und des Ausgangsglieds (26) ausgebildet ist und eine Anlagefläche (50) für den Anschlag (30) hat.

16. Unterdruck-Bremskraftverstärker (10) nach einem der vorhergehenden Ansprüche, **dadurch gekennzeichnet, daß** das Reaktionsglied (28) mit einer Schmierpaste geschmiert ist und/oder mit einer Gleitbeschichtung versehen ist und/oder dem Elastomer des Reaktionsglieds (28) beigemengte Gleitverbesserer aufweist.

## Claims

1. A vacuum brake booster (10) for an energy-assisted braking system for motor vehicles, having an input member (12) by means of which a valve arrangement (14) may be acted upon at an input force (F) in order to connect a working chamber (18) selectively to the outside or to a vacuum chamber (20) which is separated from the working chamber (18) by a working piston (24) which may be brought into operative connection with a main cylinder via an output member (26) in order to generate a braking pressure (p) and on which there is provided an elastomeric reaction member (28) through which a reaction force dependent on the braking pressure may be applied to the input member (12), wherein the output member (26) has a stop (30) which, in the event of a predetermined input force (F), comes into abutment against the working piston (24) to alter an amplification ratio of the vacuum brake booster (10), **characterized in that**, adjacent to the reaction member (28), there is arranged at least one volume take-up means (32; 140; 142) into which part of the reaction member (28) may be displaced in the event of the vacuum brake booster (10) being actuated, and **in that** the stop (30) and/or the working piston (24) are of resilient construction in the region in which the stop (30) abuts so that, when the stop (30) abuts against the working piston (24), a relative movement between the output member (26) and the working piston (24) is still possible.

2. A vacuum brake booster (10) according to Claim 1, **characterized in that** at least one volume take-up means (32) is provided on the output member (26).

3. A vacuum brake booster (10) according to Claim 2, **characterized in that** the output member (26) has a shoulder (124) which abuts against the reaction member (28) by means of an end face (126) and whereof the external peripheral face (128) delimits an annular free space (32) as the volume take-up means.

4. A vacuum brake booster (10) according to Claim 3, **characterized in that** the output member (26) is provided between the end face (126) and the external peripheral face (128) of the shoulder (124) with a ramp (132).

5. A vacuum brake booster (10) according to one of the preceding claims, **characterized in that** at least one volume take-up means (140; 142) is provided on the reaction member (28).

6. A vacuum brake booster (10) according to Claim 5, **characterized in that** the reaction member (28) is a disc which is substantially cylindrical and on the external periphery whereof a peripheral recess (140) is formed as the volume take-up means.

7. A vacuum brake booster (10) according to Claim 6, **characterized in that** the peripheral recess (140) has a semicircular cross-section.

8. A vacuum brake booster (10) according to Claim 5, **characterized in that** the reaction member (28) is a disc which is beveled in the shape of a truncated cone towards at least one of its end faces, in order to form an annular free space (142) as the volume take-up means.

9. A vacuum brake booster (10) according to one of the preceding claims, **characterized in that** the reaction member (28) is a disc which is constructed to be symmetrical about a notional plane parallel to its end faces.

10. A vacuum brake booster (10) according to one of the preceding claims, **characterized in that**, when the vacuum brake booster (10) is assembled, the stop (30) is adjustable with respect to its axial position.

11. A vacuum brake booster (10) according to one of the preceding claims, **characterized in that** the output member is a plunger (26) which has a plunger shaft (106) which can be brought into operative connection with the main cylinder, and a resiliently yieldable plunger plate (108) abutting against the reaction member (28), wherein the stop (30) is formed by an annular collar (138) mounted on the plunger plate (108).

12. A vacuum brake booster (10) according to one of Claims 1 to 10, **characterized in that** the output member is a plunger (26) which has a plunger shaft (106) which can be brought into operative connection with the main cylinder, and a plunger plate (108) abutting against the reaction member (28), wherein the stop (30) is formed by a resiliently yieldable collar part (114) secured to the plunger shaft (106).

13. A vacuum brake booster (10) according to Claim 12, **characterized in that** the collar part (114) has a sleeve portion (118) which is provided with an internal thread (116), is screwed onto an external thread (120) formed on the plunger shaft (106), and away from which an annular, resiliently yieldable collar portion (122) extends.

14. A vacuum brake booster (10) according to Claim 12 or 13, **characterized in that** the collar part (114) is made from spring steel.

15. A vacuum brake booster (10) according to one of the preceding claims, **characterized in that** the working piston (24) has an insert part (40) for receiving the reaction member (28), wherein the insert part (40) also is constructed for the purpose of guiding the input member (12) and the output member (26) and has an abutment face (50) for the stop (30).

16. A vacuum brake booster (10) according to one of the preceding claims, **characterized in that** the reaction member (28) is lubricated with a lubrication paste and/or is provided with a lubricant coating and/or has non-stick agent mixed with the elastomer of the reaction member (28).

## Revendications

1. Servofrein à dépression (10) pour un système de freinage auxiliaire pour véhicules automobiles, comportant un organe d'entrée (12), au moyen duquel un système de soupapes (14) peut être activé par une force d'entrée (F), afin de faire communiquer une chambre de travail (18) au choix avec l'environnement ou avec une chambre de dépression (20), qui est séparée de la chambre de travail (18) par un piston de travail (24) qui peut être amené en liaison active avec un maître-cylindre par l'intermédiaire d'un organe de sortie (26) en vue de générer une pression de freinage (p) et sur lequel est prévu un organe de réaction (28) en élastomère, par l'intermédiaire duquel une force de réaction, fonction de la pression de freinage, peut être introduite dans l'organe d'entrée (12), l'organe de sortie (26) étant muni d'une butée (30) qui, en présence d'une force d'entrée (F) prédéfinie, vient en appui contre le piston de travail (24) pour modifier un rapport de transmission du servofrein à dépression (10), **caractérisé en ce que**, à proximité de l'organe de réaction (28), est agencé au moins un capteur de volume (32 ; 140 ; 142), dans lequel peut s'engager une partie de l'organe de réaction (28) lorsque le servofrein à dépression (10) est actionné, et **en ce que** la butée (30) et/ou le piston de travail (24) dans la zone d'appui pour la butée (30) sont réalisés sous forme flexible, de telle sorte qu'un mouvement relatif reste possible entre l'organe de sortie (26) et le piston de travail (24) lorsque la butée (30) vient en appui sur le piston de travail (24).

2. Servofrein à dépression (10) selon la revendication 1, **caractérisé en ce qu'**il est prévu au moins un capteur (32) sur l'organe de sortie (26).

3. Servofrein à dépression (10) selon la revendication 2, **caractérisé en ce que** l'organe de sortie (26) comporte une saillie (124), qui est en appui avec une face frontale (126) contre l'organe de réaction (28) et dont la face périphérique extérieure (128) délimite un dégagement annulaire (32) formant le capteur de volume.

4. Servofrein à dépression (10) selon la revendication 3, **caractérisé en ce que** l'organe de sortie (26) est muni d'un chanfrein (132) entre la face frontale (126) et la face périphérique extérieure (128) de la saillie (124).

5. Servofrein à dépression (10) selon l'une quelconque des revendications précédentes, **caractérisé en ce qu'**il est prévu au moins un capteur de volume (140 ; 142) sur l'organe de réaction (28).

6. Servofrein à dépression (10) selon la revendication 5, **caractérisé en ce que** l'organe de réaction (28) est un disque sensiblement cylindrique, sur le pourtour extérieur duquel est ménagé un évidement périphérique (140) formant le capteur de volume.

7. Servofrein à dépression (10) selon la revendication 6, **caractérisé en ce que** l'évidement périphérique (140) a une section semi-sphérique.

8. Servofrein à dépression (10) selon la revendication 5, **caractérisé en ce que** l'organe de réaction (28) est un disque, dont au moins une des faces frontales est chanfreinée sous forme tronconique pour réaliser un dégagement annulaire (142) formant le capteur de pression.

9. Servofrein à dépression (10) selon l'une quelconque des revendications précédentes, **caractérisé en ce que** l'organe de réaction (28) est un disque qui est réalisé symétriquement à un plan imaginaire parallèle à ses faces frontales.

10. Servofrein à dépression (10) selon l'une quelconque des revendications précédentes, **caractérisé en ce que**, au moment de l'assemblage du servofrein à dépression (10), il est possible de régler la position axiale de la butée (30).

11. Servofrein à dépression (10) selon l'une quelconque des revendications précédentes, **caractérisé en ce que** l'organe de sortie est un poussoir (26) qui comporte une tige (106), pouvant être amenée en liaison active avec le maître-cylindre, et un plateau (108) élastiquement flexible, en appui sur l'organe de réaction (28), la butée (30) étant formée par un collet annulaire (138) agencé sur le plateau (108) du poussoir.

12. Servofrein à dépression (10) selon l'une quelconque des revendications 1 à 10, **caractérisé en ce que** l'organe de sortie est un poussoir (26) qui comporte une tige (106), pouvant être amenée en liaison active avec le maître-cylindre, et un plateau (108) en appui sur l'organe de réaction (28), la butée (30) étant formée par un collet (114) élastiquement flexible, fixé sur la tige (106) du poussoir.

13. Servofrein à dépression (10) selon la revendication 12, **caractérisé en ce que** le collet (114) comporte une partie formant manchon (118), qui est munie d'un taraudage (116), qui est vissé sur le filetage (120) réalisé sur la tige (106) du poussoir, et de laquelle s'écarte une partie formant collet (122) annulaire, élastiquement flexible.

14. Servofrein à dépression (10) selon la revendication 12 ou 13, **caractérisé en ce que** le collet (114) est réalisé en acier à ressorts.

15. Servofrein à dépression (10) selon l'une quelconque des revendications précédentes, **caractérisé en ce que** le piston de travail (24) comporte une pièce intercalaire (40) destinée à recevoir l'organe de réaction (28), ladite pièce intercalaire (40) étant aussi conçue pour le guidage de l'organe d'entrée (12) et de l'organe de sortie (26) et comporte une surface d'appui (50) pour la butée (30).

16. Servofrein à dépression (10) selon l'une quelconque des revendications précédentes, **caractérisé en ce que** l'organe de réaction (28) est lubrifié au moyen d'une pâte de lubrification et/ou est munie d'une garniture antifriction et/ou comporte un agent améliorant le glissement, ajouté dans l'élastomère de l'organe de réaction (28).
